# EUROPEAN PATENT APPLICATION

(11) **EP 2 953 031 A1**
(43) Date of publication of application: **09.12.2015**
(21) Application number: 13873718.4
(22) Date of filing: 22.11.2013
(51) Int. Cl.: G06F 12/16, G06F 3/06, G06F 9/50

(54) **MANAGEMENT DEVICE AND MANAGEMENT SYSTEM**

(30) Priority: 31.01.2013 JP 2013016855
(71) Applicant: Hitachi, Ltd., Tokyo 100-8280 (JP)
(72) Inventor: ISHII, Daisuke, Tokyo 100-8280 (JP); OKUNO, Michitaka, Tokyo 100-8280 (JP); TAKAHASHI, Yosuke, Tokyo 100-8280 (JP)
(74) Representative: MERH-IP Matias Erny Reichl Hoffmann
(86) International application number: PCT/JP2013/081465
(87) International publication number: WO 2014/119100

(57) **Abstract**

a management apparatus is capable of more precisely distributing the load in redundant system reconstruction. The management apparatus is configured to detect a data migration instruction to migrate data of any one of plurality of data processing units; identify a plurality of groups that a plurality of operational data clusters stored by the any one of the plurality of data processing units belong to; identify a plurality of data processing units corresponding to each group; and change a redundant data cluster of the same group as an operational data cluster stored by the any one of the plurality of data processing units to an operational data cluster.

## Description

### BACKGROUND OF THE INVENTION

This invention relates to a management apparatus, a management method, and a management system for managing data.

Hitherto, there has been disclosed an apparatus including both a load distribution method and a redundant system reconstruction method (refer to JP 2005-004681 A and JP 2007-288711 A).

A storage system disclosed in JP 2005-004681 A is configured to allocate logical volumes without fixing the role of a physical module by duplexing data within the logical volumes. In the storage system disclosed in JP 2005-004681 A, an integrated administrative module selects a module having a storage device in a designated range as a slice data allocation target based on a request from a client. The integrated administrative module allocates a primary logical volume to the module having a non-allocated slice area one by one in round robin scheduling as required. The integrated administrative module allocates a secondary logical volume to a module, as required, which is selected by a predetermined evaluation function under the restriction that the module is not the same module as the module having a primary logical volume in charge of the same data area.

A gateway apparatus disclosed in JP 2007-288711 A is configured to improve the processing capability of the gateway apparatus in steps in accordance with an increase in traffic. When a policy including a destination range for specifying a packet to be controlled and control content is input, a setting controller determines active and standby session border controllers (SBCs) and sets the policy so that the load of each SBC is equal. The setting controller associates and registers the destination range and transmission destination information indicating the active and standby SBCs in a forwarding table in a distribution router. Further, when a new SBC is added, the setting controller changes the active and standby SBCs of a policy setting destination so that the loads of SBCs including the added SBC are equal to one another. In addition, the setting controller changes the content of the forwarding table in the distribution router to match the state after the setting destination of the policy is changed.

In redundant system reconstruction, when a storage destination module among a plurality of storage destination modules fails, another storage destination module storing redundant data of the operational data in the failed storage destination module utilizes that redundant data as operational data.

However, when there is only one storage destination module with redundant data, that storage destination module is required to handle not only its own operational data, but also handle the redundant data of the failed storage destination module as operational data. Therefore, there is a problem in that the load concentrates on that storage destination module. In JP 2005-004681 A, the load during data restoration when a module has failed is distributed by dividing a logical volume, allocating the divided logical volumes to a plurality of modules by round robin scheduling, and duplexing. However, in JP 2005-004681 A, the load distribution for data references to modules from a user is not addressed. Therefore, data references from the user may be concentrated on a specific module after a module has failed, causing the load to become concentrated.

Further, in redundant system reconstruction, when newly adding a storage destination module to a plurality of storage destination modules, in order to be ready for a failure of the added storage destination module, it is necessary to avoid the above-mentioned load concentration even for the added storage destination module. In JP 2007-288711 A, based on an increase or a decrease in SBCs, the active and standby SBCs of a policy setting destination are changed so that the loads of SBCs are equal to one another. However, in JP 2007-288711 A, it is not considered how the operational data and the redundant data are held, or how to reallocate the operational data and the redundant data based on the change to the active and standby SBCs.

### SUMMARY OF THE INVENTION

It is an object of this invention to provide a management apparatus and a management system that are capable of more precisely distributing the load in redundant system reconstruction.

An aspect of the invention disclosed in this application is a management apparatus, including: a plurality of data processing units, each of the plurality of data processing units, which are configured to execute data processing, being configured to, for a set of operational data clusters and a set of redundant data clusters that are the same as the operational data clusters, respectively, store a plurality of operational data clusters of groups different from groups of another data processing unit and store a plurality of redundant data clusters of groups different from the groups of the another data processing unit, each affiliated group of each of the plurality of operational data clusters stored in each of the plurality of data processing units being a group different from each affiliated group of each of the plurality of redundant data clusters stored in the each of the plurality of data processing units; a detection module configured to detect a data migration instruction to migrate data of any one of the plurality of data processing units; a first identification module configured to identify, in the case where the data migration instruction is detected by the detection module, a plurality of groups that a plurality of operational data clusters stored by the any one of the plurality of data processing units belong to by referring to correspondence information associating the groups with the plurality of data processing units; a second identification module configured to identify a plurality of data processing units corresponding to each group identified by the first identification module by referring to group information associating each of the plurality of data processing units with an affiliated group of a plurality of redundant data clusters stored by the each of the plurality of data processing units; and a change module configured to change, for each of the plurality of data processing units identified by the second identification module, a redundant data cluster of the same group as an operational data cluster stored by the any one of the plurality of data processing units to an operational data cluster.

According to the representative embodiment of this invention, the load in redundant system reconstruction can be more precisely distributed. Other objects, configurations, and effects than those described above become apparent from the following description of an embodiment of this invention.

### BRIEF DESCRIPTION OF THE DRAWINGS

FIG. 1 is a block diagram for illustrating a management apparatus according to a first embodiment of this invention.
FIG. 2 is an explanatory diagram for illustrating group determination processing and packet allocation processing performed by the distributed processing unit.
FIG. 3 is an explanatory diagram for showing a redundant system reconstruction example when groups are not used.
FIG. 4 is an explanatory diagram for showing a redundant system reconstruction example when using groups according to the first embodiment.
FIG. 5 is a block diagram for illustrating a hardware configuration example of each of the control unit, the distributed processing unit, and the data processing unit.
FIG. 6 is a block diagram for illustrating a functional configuration example 1 of the control unit and the distributed processing unit according to the first embodiment.
FIG. 7 is an explanatory diagram for showing an example of the group information.
FIG. 8 is an explanatory diagram for illustrating the operations carried out when a failure occurs in a data processing unit.
FIG. 9 is a flowchart for illustrating an operation procedure example when a failure occurs in a data processing unit.
FIG. 10 is an explanatory diagram for illustrating a redundancy reconstruction example after the recovery of FIG. 8.
FIG. 11 is an explanatory diagram for showing a state after update of the group information 610 by the redundancy reconstruction performed in FIG. 10.
FIG. 12 is a flowchart for illustrating an example of the redundancy reconstruction processing illustrated in FIG. 10 by the construction module.
FIG. 13 is a flowchart for illustrating in detail a processing procedure example of the placement destination determination processing (Step S1204) illustrated in FIG. 12.
FIG. 14 is a block diagram for illustrating a functional configuration example 2 of the control unit and the distributed processing unit according to the first embodiment.
FIG. 15 is an explanatory diagram (part 1) for illustrating a redundancy reconstruction example when the number of data processing units is increased.
FIG. 16 is an explanatory diagram (part 2) for illustrating a redundancy reconstruction example when the number of data processing units is increased.
FIG. 17 is an explanatory diagram for showing an update example of the group information.
FIG. 18 is a flowchart for illustrating a redundancy reconstruction procedure example of the operational data clusters.
FIG. 19 is a flowchart for illustrating a redundancy reconstruction procedure example of the redundant data clusters.
FIG. 20 is an explanatory diagram for illustrating another example of redundancy reconstruction.
FIG. 21 is an explanatory diagram for illustrating a switching example of the correspondence information.
FIG. 22 is a block diagram for illustrating the management apparatus according to the second embodiment.
FIG. 23 is a block diagram for illustrating a configuration of the management apparatus according to the third embodiment.
FIG. 24 is a block diagram for illustrating a functional configuration example 1 of the control unit and the distributed processing unit according to the third embodiment.
FIG. 25 is a block diagram for illustrating a functional configuration example 2 of the control unit and the distributed processing unit according to the third embodiment.
FIG. 26 is a block diagram for illustrating the management system according to the fourth embodiment.
FIG. 27 is a block diagram for illustrating the management system according to the fifth embodiment.

### DETAILED DESCRIPTION OF THE PREFERRED EMBODIMENTS

Management apparatus according to embodiments of this invention are described below with reference to the attached drawings. In the following embodiments, a gateway apparatus is described as one example of the management apparatus according to this invention. It should be noted that "operational data" refers to data that is currently used, and "redundant data" refers to duplicate data of the operational data.

### (First Embodiment)

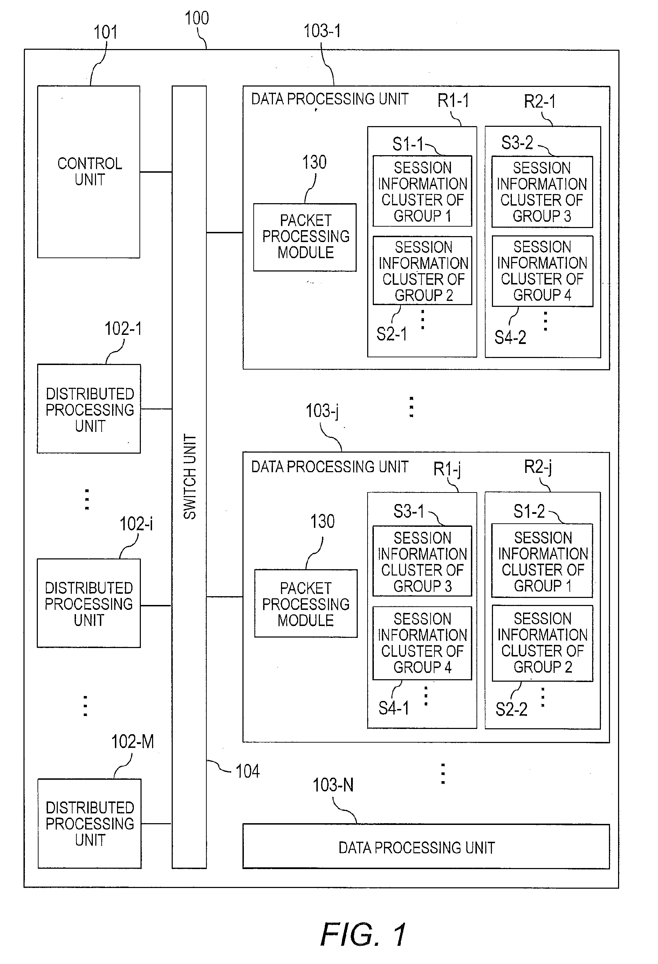

FIG. 1 is a block diagram for illustrating a management apparatus according to a first embodiment of this invention. In a management apparatus 100, a control unit 101, a plurality of distributed processing units 102-1 to *102-M* (*M* is an integer of 1 or more), and a plurality of data processing units 103-1 to 103-*N* (*N* is an integer of 3 or more) are coupled to one another via a switch unit 104. The control unit 101 is configured to manage the whole management apparatus 100 and to execute redundant system reconstruction processing. Redundant system reconstruction processing is processing for, when a data processing unit 103-*j* (*j* is an integer satisfying 1≤*j*≤*N*) of the plurality of data processing units 103-1 to 103-*N* has failed, continuing the data processing of the failed data processing unit *103-j* by an existing data processing unit 103-*k* (*k≠j*)*,* which allows a service based on data processing to be continued. Further, this processing also allows the next failure to be dealt with by reconstructing the redundant system among the existing data processing units 103-*k*.

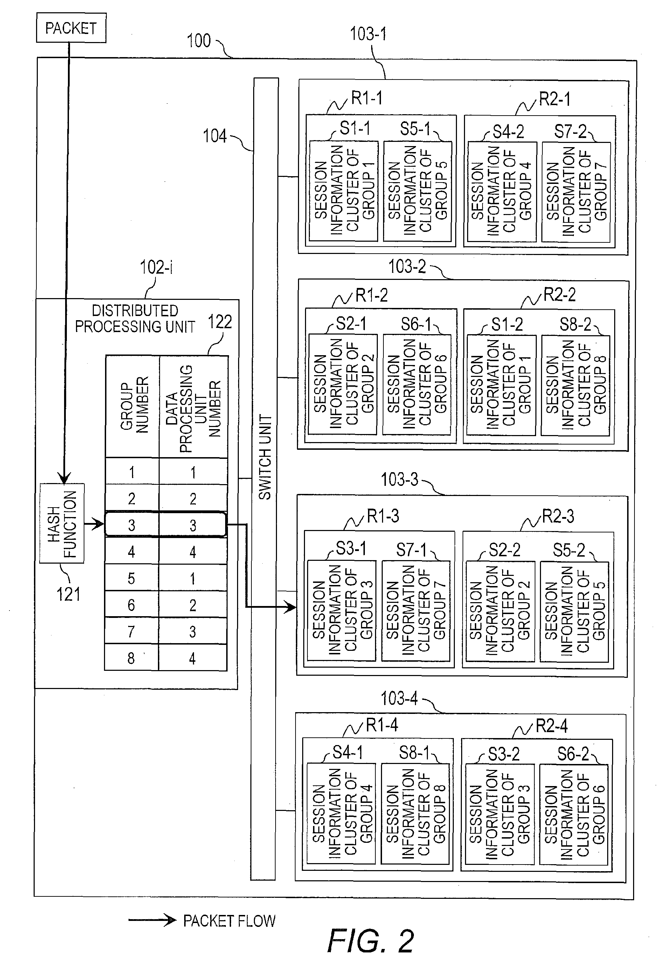

The plurality of distributed processing units 102-1 to 102-M are configured to transmit and receive packets. A distributed processing unit 102-*i* (*i* is an integer satisfying 1≤*i≤M*) is configured to determine a group that a received packet is to belong to based on characteristic information about that packet. The groups are described later. Examples of the characteristic information may include, in the case of a gateway apparatus, a destination address of the packet. It should be noted that the information used as the characteristic information is not limited to the destination address, and information based on the apparatus, protocol, or service to be employed may also be used. Further, the distributed processing unit 102-*i* is configured to transfer a packet allocated to a group to the data processing unit 103-*j* responsible for the group that the packet is supposed to belong to. Processing for determining the group and allocating the packet is described with reference to FIG. 2. Further, the distributed processing unit 102-*i* is configured to externally transfer the packet that has been processed by a packet processing module 130. Each distributed processing unit 102-*i* realizes the same functions.

The plurality of data processing units 103-1 to 103-*N* are configured to manage session information about the packets transferred from the distributed processing unit 102-*i*. The data processing unit 103-*j* includes the packet processing module 130, an operational data cluster set R1-*j*, and a redundant data cluster set R2-*j*. The letter *j* represents a number (data processing unit number) specifying the data processing unit 103-*j*. The packet processing module 130 is configured to analyze a packet and extract session information, which is information about a characteristic of the packet, such as a packet destination address or a packet source address. The packet processing module 130 stores the extracted session information as operational data.

The operational data cluster set R1-*j* is a set of operational data clusters. An operational data cluster is a set of operational data belonging to the same group. For example, the operational data cluster set R1-1 stored in the data processing unit 103-1 includes, as operational data clusters, a session information cluster S1-1 of a group 1 and a session information cluster S2-1 of a group 2.

The redundant data cluster set R2-*j* is a set of redundant data clusters. A redundant data cluster is a set of redundant data belonging to the same group. For example, the redundant data cluster set R2-1 stored in the data processing unit 103-1 includes, as redundant data clusters, a session information cluster S3-2 of a group 3 and a session information cluster S4-2 of a group 4.

Further, when an operational data cluster of a data processing unit 103-*j* is updated, the redundant data cluster corresponding to that operational data cluster is also updated. For example, when the session information cluster S1-1 of the group 1 in the operational data cluster set R1-1 of the data processing unit 103-1 is updated, a session information cluster S1-2 of the group 1 in a redundant data cluster set R2-2 of the data processing unit 103-2 is also updated. This synchronization processing may be executed with use of the control unit 101, or may be executed by the data processing units 103-*j* without using the control unit 101.

Now, an example of externally transferring a packet by the management apparatus 100 is described. A packet transferred by the data processing unit 103-*j* is input to the switch unit 104. Based on the destination address of the transferred packet, the switch unit 104 selects the distributed processing unit 102-*i* capable of transferring the packet to a network close to the destination address, and transfers the transferred packet to that distributed processing unit 102-*i*. Then, the distributed processing unit 102-*i* externally transfers the transferred packet.

FIG. 2 is an explanatory diagram for illustrating group determination processing and packet allocation processing performed by the distributed processing unit 102-*i*. The distributed processing unit 102-*i* includes a hash function 121 and correspondence information 122. The distributed processing unit 102-*i* extracts characteristic information from the input packet using the hash function 121. Specifically, for example, the distributed processing unit 102-*i* provides the destination address of the packet identifying the session to the hash function 121, and extracts a hash value.

The correspondence information 122 is a table associating a group number with the data processing unit number *j*. The group number is information specifying the group to be allocated to the session information. Further, the data processing unit number *j* is information specifying the data processing unit 103-*j*.

Examples of an index for monitoring a load state of the data processing unit 103-*j* include a processor utilization rate of the data processing unit 103-*j*, and the number of pieces of session information being processed by the data processing unit 103-*j*. In this embodiment, the management apparatus 100 classifies the input packets into units, called groups, to be used to distribute the input packet to the data processing unit 103-*j*, based on the characteristic information relating to the session, such as the destination address of the input packet.

In other words, a group is a unit aggregating a plurality of pieces of session information that a packet belongs to. More specifically, a group is a set of pieces of session information having a common hash value regarding the characteristic information relating to the session. Further, the group number in the correspondence information 122 is a value that the hash value can take.

In FIG. 2, for ease of illustration, the number of groups is "8", and the number of data processing units is "4". When a packet is input to the distributed processing unit 102-*i*, for example, the group number "3", which is a hash value, is extracted from the packet by the hash function 121. In the correspondence information 122, the data processing unit number *j* corresponding to the group number "3" is "3". Therefore, the distributed processing unit 102-*i* determines that the packet transfer destination is a data processing unit 103-3, and transfers the packet to the data processing unit 103-3.

The data processing unit 103-3 processes the transferred packet at the packet processing module 130, and extracts the session information. The extracted session information is session information about the group 3. Then, the data processing unit 103-3 adds the extracted session information to a session information cluster S3-1 of the group 3.

Thus, the data processing unit 103-*j* to be the packet transfer destination is determined by, at the distributed processing unit 102-*i*, performing one calculation of a hash value that uses the hash function 121 and performing one table search that uses the correspondence information 122. Therefore, the packet distribution processing can be simplified, and the distributed processing unit 102-*i* can be realized at a low hardware cost.

Further, when increasing or decreasing the number of data processing units 103-*j*, the transfer destination can be changed simply by rewriting the data processing unit number *j* in the correspondence information 122. Therefore, there is no need to change the output result of the hash function 121 or change the table size of the correspondence information 122.

For example, in FIG. 2, when the data processing unit 103-3 has failed, and the transfer destination data processing unit 103-*j* having a group number: 3 is to be changed from the data processing unit 103-3 to the data processing unit 103-1, it is enough to just rewrite the data processing unit number *j* in the record for group number: 3 of the correspondence information 122 from "3" to "1". Therefore, the amount of information managed by the distributed processing unit 102-*i* is not caused to increase or decrease by the number of sessions or the number of packets being processed, thereby achieving stable and high-speed processing.

It should be noted that the number of groups is determined based on, for example, the memory capacity and calculation capability of the distributed processing unit 102-*i*, and the minimum number and the maximum number of data processing units 103-*j* that are used. When the number of groups is smaller, the table size of the correspondence information 122 is also smaller, and hence the utilized memory capacity of the distributed processing unit 102-*i* and the calculation amount relating to table search can be reduced. However, in this case, there is a high likelihood of a deterioration in load distribution performance due to the distribution not being uniformly carried out.

On the other hand, when the number of groups is larger, higher load distribution performance can be realized. However, in this case, the table size of the correspondence information 122 increases, and the number of steps relating to table search also increases. Consequently, the hardware resources required by the distributed processing unit 102-*i* in order to realize high-speed processing need to have a higher performance, which means that there is a high likelihood of an increase in hardware costs.

Further, the number of groups can be set to be the same number as the number of sessions. However, for example, if there are one million sessions to be simultaneously processed by the management apparatus 100, this means that correspondence information 122 capable of holding one million entries needs to be prepared, causing the utilized memory capacity and table search time to increase.

Therefore, it is desirable to set a moderate value for the number of groups. For example, it is preferred to set the number of groups to be about from 10-times to 100-times the maximum number of data processing units 103-*j* that are used. The operational data clusters and the redundant data clusters are managed by dividing the session information into groups.

In the example illustrated in FIG. 2, the data processing unit 103-1 holds the session information cluster S1-1 of the group 1 as an operational data cluster. Further, the data processing unit 103-1 holds a session information cluster S5-2 of a group 5 as an operational data cluster. The data processing unit 103-1 holds a session information cluster S4-2 of the group 4 as a redundant data cluster. Further, the data processing unit 103-1 holds a session information cluster S7-2 of a group 7 as a redundant data cluster.

Further, in each data processing unit 103-*j*, the operational data clusters are stored so that the groups do not overlap each other. Similarly, in each data processing unit 103-*j*, the redundant data clusters are stored so that the groups do not overlap each other. In addition, in each data processing unit 103-*j*, the operational data clusters and the redundant data clusters are stored so that the groups do not overlap one another within the operational data cluster set R1-*j* and the redundant data cluster set R2-*j*.

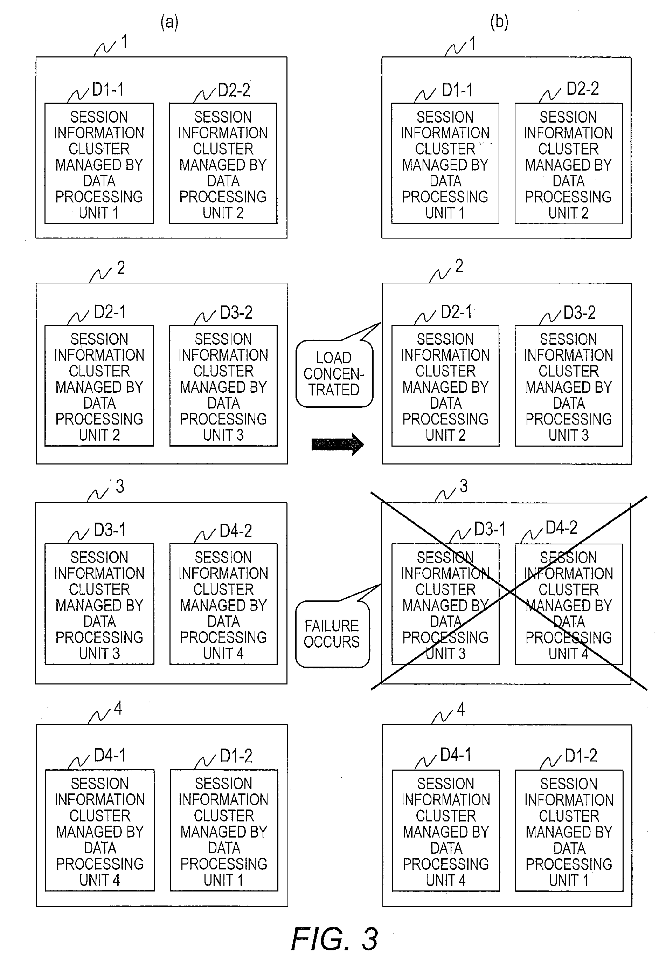

FIG. 3 is an explanatory diagram for showing a redundant system reconstruction example when groups are not used. For ease of illustration, the number of data processing units is four. In part (a) of FIG. 3, a state before a failure has occurred is shown, and in part (b) of FIG. 3, a state after a failure has occurred is shown. In parts (a) and (b) of FIG. 3, the session information clusters in the left column are operational data clusters, and the session information clusters in the right column are redundant data clusters.

When a failure occurs in a data processing unit 3, a session information cluster D3-1 that has been operated as an operational data cluster in the data processing unit 3 can no longer be utilized, and hence a data processing unit 2 holding a session information cluster D3-2, which is a duplicate (redundant data cluster) of the session information cluster D3-1, continues the processing of the data processing unit 3. In this case, the data processing unit 2 executes the data processing of each of a session information cluster D2-1 and a session information cluster D3-2, and hence has a heavier load than that of the other data processing units 1 and 3.

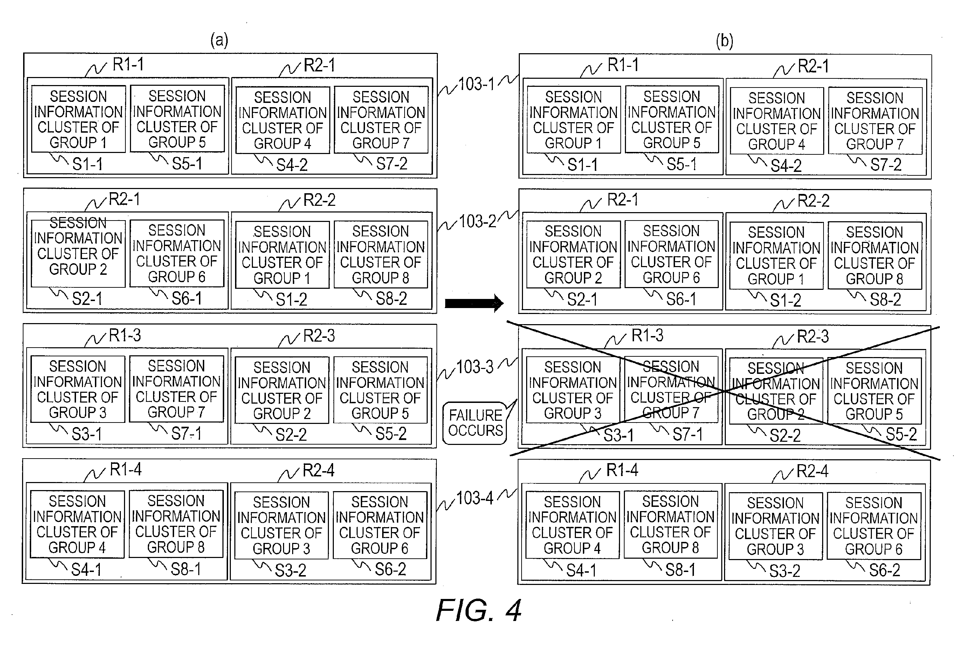

FIG. 4 is an explanatory diagram for showing a redundant system reconstruction example when using groups according to the first embodiment. For ease of illustration, the number of data processing units 103-*j* is four, and the total number of groups is eight. In part (a) of FIG. 4, a state before a failure has occurred is shown, and in part (b) of FIG. 4, a state after a failure has occurred is shown.

When a failure occurs in the data processing unit 103-3, the session information cluster S3-1 in an operational data cluster set R1-3 can no longer be utilized by the data processing unit 103-3. Therefore, a data processing unit 103-4 holding the session information cluster S3-2, which is a duplicate (redundant data cluster) of the session information cluster S3-1, continues the processing of the data processing unit 103-3. Further, the session information cluster S7-1 in the operational data cluster set R1-3 can no longer be utilized by the data processing unit 103-3. Therefore, the data processing unit 103-1 holding the session information cluster S7-2, which is a duplicate (redundant data cluster) of the session information cluster S7-1, continues the processing of the data processing unit 103-3. Consequently, even if the data processing unit 103-3 has failed, because processing is continued by distributing the session information clusters among the other groups, the load is not concentrated on a portion of the remaining data processing units 103-*j*, which allows the load to be distributed more precisely.

Next, an initial placement example of the operational data clusters and the redundant data clusters is described with reference to part (a) of FIG. 4. First, the management apparatus 100 performs an initial placement of the operational data clusters. The management apparatus 100 allocates a group to each of the data processing units 103-*j* in order of group number by round robin scheduling. For example, in parts (a) and (b) of FIG. 4, the number of data processing units 103-*j* is "4", and the number of groups is "8". Consequently, the group 1 is allocated to the data processing unit 103-1, the group 2 is allocated to the data processing unit 103-2, the group 3 is allocated to the data processing unit 103-3, the group 4 is allocated to the data processing unit 103-4, the group 5 is allocated to the data processing unit 103-1, a group 6 is allocated to the data processing unit 103-2, the group 7 is allocated to the data processing unit 103-3, and a group 8 is allocated to the data processing unit 103-4.

Next, the management apparatus 100 performs an initial placement of the redundant data clusters. The management apparatus 100 places the redundant data clusters so that, in each data processing unit 103-*j*, the operational data clusters and the redundant data clusters, which are duplicates of the operational data clusters, are not placed in the same data processing unit. For example, because the session information cluster S1-1 of the group 1, which is an operational data cluster, is placed in the data processing unit 103-1, the management apparatus 100 does not place the session information cluster S1-2 of the group 1, which is the redundant data cluster thereof, in the data processing unit 103-1.

Thus, in order to prevent the operational data clusters and the redundant data clusters, which are duplicates of the operational data clusters, from being placed in the same data processing unit, the management apparatus 100 allocates a duplicate of the operational data clusters in each data processing unit by round robin scheduling in order of group number starting from the data processing unit having the next number from the data processing unit 103-*j* of the duplication source. By changing the start of the round robin scheduling each time the duplication source data processing unit 103-*j* is changed, unevenness of the redundant data clusters can be smoothed out. For example, the management apparatus 100 first allocates the duplicate of the group 1 and the duplicate of the group 5, which are the operational data clusters of the data processing unit 103-1, to data processing units 103-*j* other than the data processing unit 103-1. Specifically, based on round robin scheduling starting from the data processing unit 103-2, the management apparatus 100 allocates the group 1 to the data processing unit 103-2 and the group 5 to the data processing unit 103-3. Next, the management apparatus 100 allocates the duplicate of the group 2 and the duplicate of the group 6, which are the operational data clusters of the data processing unit 103-2, to data processing units 103-*j* other than the data processing unit 103-2. Specifically, based on the round robin scheduling starting from the data processing unit 103-3, the management apparatus 100 allocates the group 2 to the data processing unit 103-3 and the group 6 to the data processing unit 103-4. Next, the management apparatus 100 allocates the duplicate of the group 3 and the duplicate of the group 7, which are the operational data clusters of the data processing unit 103-3, to data processing units 103-*j* other than the data processing unit 103-3. Specifically, based on the round robin scheduling starting from the data processing unit 103-4, the management apparatus 100 allocates the group 3 to the data processing unit 103-4 and the group 7 to the data processing unit 103-1. Finally, the management apparatus 100 allocates the duplicate of the group 4 and the duplicate of the group 8, which are the operational data clusters of the data processing unit 103-4, to data processing units 103-*j* other than the data processing unit 103-4. Specifically, based on the round robin scheduling starting from the data processing unit 103-1, the management apparatus 100 allocates the group 4 to the data processing unit 103-1 and the group 8 to the data processing unit 103-2. This placement method is one example. Various other methods may also be used.

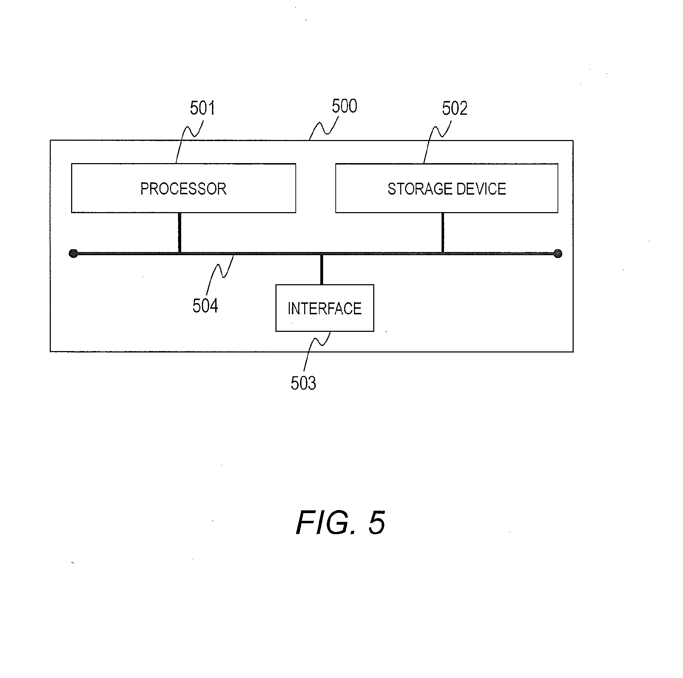

FIG. 5 is a block diagram for illustrating a hardware configuration example of each of the control unit 101, the distributed processing unit 102-*i*, and the data processing unit 103-*j*. The control unit 101, the distributed processing unit 102-*i*, and the data processing unit 103-*j* (computer 500) each include a processor 501, a storage device 502, an interface 503, and a bus 504. The processor 501, the storage device 502, and the interface 503 are coupled to one another by the bus 504. The processor 501 is configured to read programs stored in the storage device 502 and execute processing based on those programs. The storage device 502 stores programs for executing processing by each of the control unit 101, the distributed processing unit 102-*i*, and the data processing unit 103-*j*. Further, the storage device 502 stores tables to be referred to when a program is executed. The interface 503 is configured to input and output data.

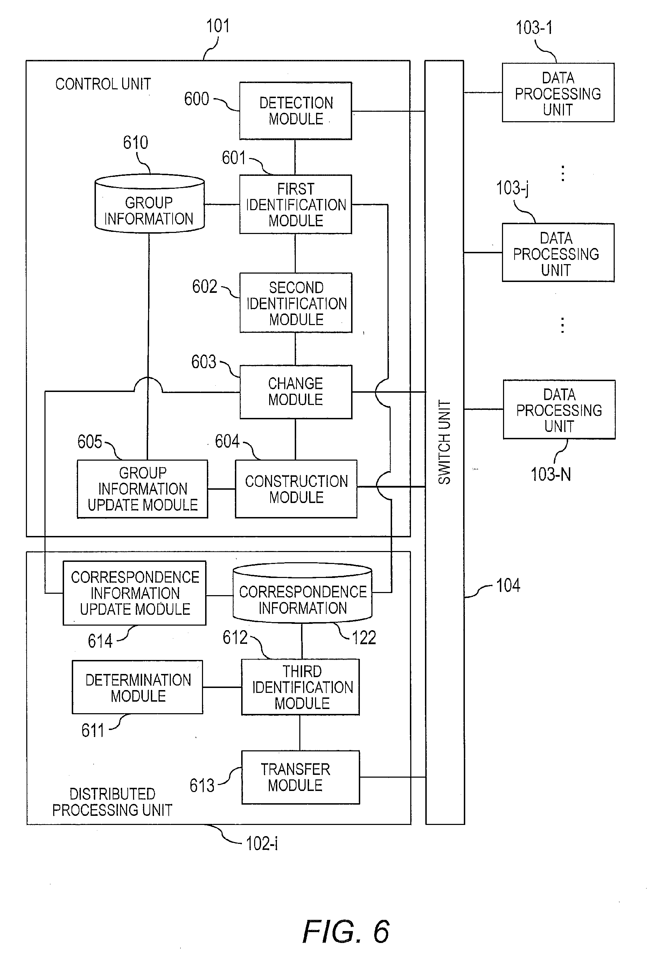

FIG. 6 is a block diagram for illustrating a functional configuration example 1 of the control unit 101 and the distributed processing unit 102-*i* according to the first embodiment. The control unit 101 includes group information 610, a detection module 600, a first identification module 601, a second identification module 602, a change module 603, a construction module 604, and a group information update module 605. The group information 610 is information stored in the storage device 502 illustrated in FIG. 5.

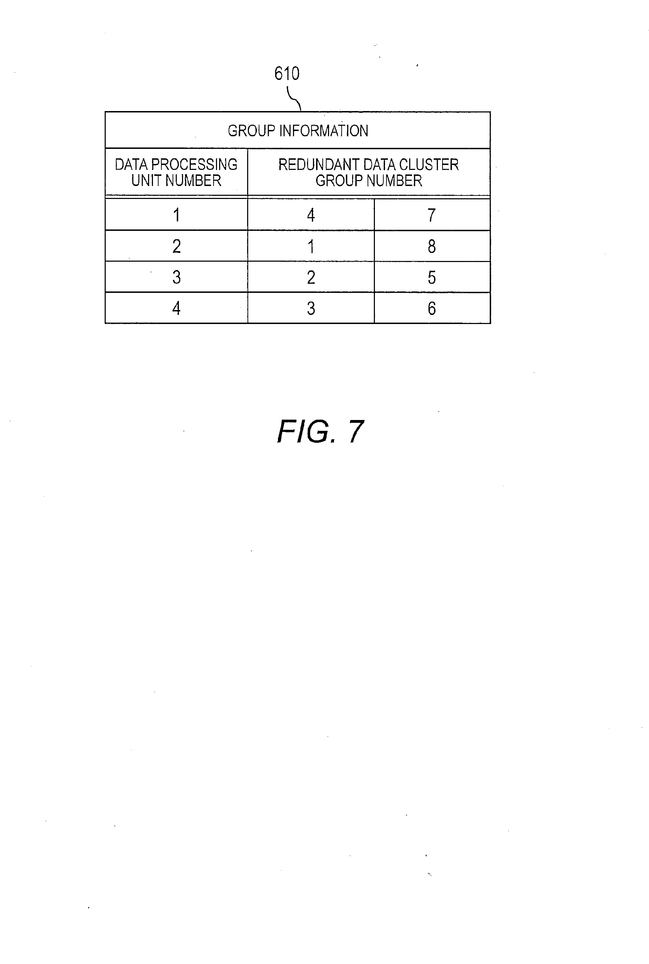

FIG. 7 is an explanatory diagram for showing an example of the group information 610. The group information 610 is a table associating each of the plurality of data processing units 103-1 to 103-*N* with an affiliated group of the plurality of redundant data clusters stored by the data processing unit 103-*j*.

Returning now to the description of FIG. 6, the functions of the detection module 600, the first identification module 601, the second identification module 602, the change module 603, the construction module 604, and the group information update module 605 are specifically realized by, for example, the processor 501 executing programs stored in the storage device 502 illustrated in FIG. 5.

The detection module 600 is configured to detect a data migration instruction of any one of the data processing units 103-*j* among the plurality of data processing units 103-1 to 103-*N*. Specifically, for example, when a failure has occurred in any one of the data processing units 103-*j* among the plurality of data processing units 103-1 to 103-*N*, the detection module 600 detects a failure occurrence notification from the data processing unit 103-*j* in which the failure occurred as a data migration instruction. Further, in addition to a failure, the detection module 600 may also detect the detaching of a data processing unit 103-*j* from the management apparatus 100 as the data migration instruction.

The first identification module 601 is configured to identify a plurality of groups that a plurality of operational data clusters stored by any one of the data processing units 103-*j* belong to by referring to the correspondence information 122 when a data migration instruction is detected by the detection module 600. Specifically, for example, when a failure of the data processing unit 103-3 is detected, as illustrated in FIG. 2, the first identification module 601 identifies the group numbers "3" and "7" corresponding to the data processing unit number "3" of the failed data processing unit 103-3. In the example illustrated in FIG. 6, the first identification module 601 refers to the correspondence information 122 held by the distributed processing unit 102-*i*. However, a functional configuration may also be employed in which the control unit 101 holds the correspondence information 122, and the first identification module 601 refers to the correspondence information 122 held by the control unit 101. In this functional configuration, the information can be referred to while keeping the information in the control unit 101, without transferring the information between the control unit 101 and the distributed processing unit 102-*i*. This has the benefit that the time taken to refer to the information can be reduced compared with the functional configuration illustrated in FIG. 6.

The second identification module 602 is configured to identify a plurality of data processing units 103-1 to 103-*N* corresponding to each group identified by the first identification module 601 by referring to the group information 610. Specifically, for example, when the group numbers "3" and "7" have been identified by the first identification module 601, the second identification module 602 identifies the data processing unit 103-4 having the data processing unit number (*j*=4) corresponding to the group number "3" and identifies the data processing unit 103-1 having the data processing unit number (*j*=1) corresponding to the group number "7".

The change module 603 is configured to change a redundant data cluster of the same group as an operational data cluster stored by any one of the data processing units 103-*j* to an operational data cluster for each of the plurality of data processing units 103-1 to 103-*N* identified by the second identification module 602. Specifically, as shown in parts (a) and (b) of FIG. 4, for the data processing unit 103-1 identified by the second identification module 602, the change module 603 changes the session information cluster S7-2, which is the redundant data cluster that belongs to the same group as the session information cluster S7-1 of the group 7, which is an operational data cluster stored by the data processing unit 103-3 that the failure has occurred in, to an operational data cluster.

Similarly, for the data processing unit 103-4 identified by the second identification module 602, the change module 603 changes the session information cluster S3-2, which is the redundant data cluster that belongs to the same group as the session information cluster S3-1 of the group 3, which is an operational data cluster stored by the data processing unit 103-3 that the failure has occurred in, to an operational data cluster. This change is executed by, for example, changing a flag for identifying an operational/redundant status set for each redundant data cluster. Therefore, data is not transferred.

The construction module 604 is configured to execute redundant system reconstruction processing for the operational data cluster set R1-*j* and the redundant data cluster set R2-*j* after the change by the change module 603. Specifically, for example, after a change by the change module 603, for the redundant data cluster set, the construction module 604 executes construction processing so that each of the data processing units 103-*k* remaining after any one of the data processing units 103-*j* has been removed stores a plurality of redundant data clusters of different groups and affiliated groups of the operational data clusters and affiliated groups of the redundant data clusters stored in each remaining data processing unit 103-*k* are different groups.

More specifically, for example, the construction module 604 identifies the session information cluster S2-2 of the group 2 stored as a redundant data cluster in the failed data processing unit 103-3, the session information cluster S2-1 of the group 2 that is the duplicate source of the session information cluster S5-2 of the group 5, and the session information cluster S5-1 of the group 5. Then, the construction module 604 duplicates the identified session information clusters S2-1 and S5-1, and stores the duplicated session information clusters in the remaining data processing units 103-*k*.

Further, because the session information cluster S3-2 of the group 3 and the session information cluster S7-2 of the group 7 have been promoted to operational data clusters, there is a need to perform redundancy processing. Therefore, the construction module 604 duplicates each of the session information cluster S3-2 of the group 3 and the session information cluster S7-2 of the group 7. Then, the construction module 604 stores the duplicated session information cluster S3-3 of the group 3 and the session information cluster S7-3 of the group 7 in the remaining data processing units 103-*k*.

In this case, the construction module 604 executes construction processing so in that the remaining data processing units 103-*k*, the affiliated groups of the redundant data clusters are different from one another, and in the same data processing unit, the affiliated groups of the operational data clusters are different from the affiliated groups of the redundant data clusters.

The group information update module 605 is configured to update the group information 610 based on the construction result by the construction module 604. Although a specific example of updating is described later, updating the group information 610 allows cases in which a failure occurs after construction to be handled by referring to the group information 610 even after updating.

Further, the distributed processing unit 102-*i* includes the correspondence information 122, a determination module 611, a third identification module 612, a transfer module 613, and a correspondence information update module 614. The correspondence information 122 is the information stored in the storage device 502 illustrated in FIG. 5. The functions of the determination module 611, the third identification module 612, the transfer module 613, and the correspondence information update module 614 are specifically realized by, for example, the processor 501 executing programs stored in the storage device 502 illustrated in FIG. 5.

The determination module 611 is configured to determine an affiliated group of the operational data relating to input data based on characteristic information about the input data. The input data is, for example, a packet that is received from the outside. The characteristic information about the input data is, for example, a session identifier, such as the destination address included in the packet. The operational data relating to the input data is, for example, session information.

The determination module 611 is configured to calculate the hash value by providing the characteristic information about the input data, such as the destination address, to the hash function 121. The calculated hash value is the group number. Consequently, the affiliated group of the operational data relating to the input data is determined.

The third identification module 612 is configured to identify the data processing unit 103-*j* corresponding to the affiliated group of the operational data relating to the input data determined by the determination module 611 by referring to the correspondence information 122. Specifically, for example, when the group number of the affiliated group is "3", the third identification module 612 identifies the data processing unit 103-3 corresponding to the affiliated group by taking the data processing unit number "3" corresponding to the group number "3".

The transfer module 613 is configured to transfer the input data to the data processing unit identified by the third identification module 612. Specifically, for example, when the data processing unit 103-3 corresponding to the affiliated group has been identified by the third identification module 612, the transfer module 613 transfers the input data to the data processing unit 103-3. The data processing unit 103-3 receives the input data, processes the input data, and adds the session information of the input data to the operational data cluster set R1-3 of the data processing unit 103-3 as session information about the group 3, which is operational data.

The correspondence information update module 614 is configured to update the correspondence information 122 based on the change result by the change module 603. Specifically, for example, as shown in parts (a) and (b) of FIG. 4, when a failure has occurred in the data processing unit 103-3, the session information S3-2 of the group 3, which is the redundant data of the session information cluster S3-1 of the group 3 in the operational data cluster set R1-3 of the data processing unit 103-3, is changed from redundant data to operational data in the data processing unit 103-4. Based on this change, the correspondence information update module 614 updates the data processing unit number *j* in the entry having the group number "3" of the correspondence information 122 from "3" to "4".

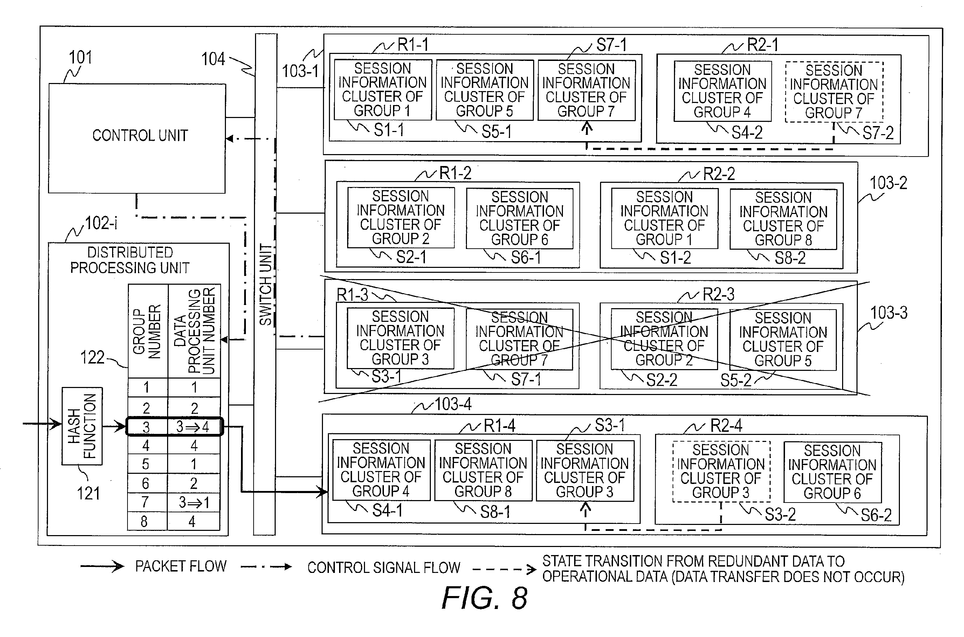

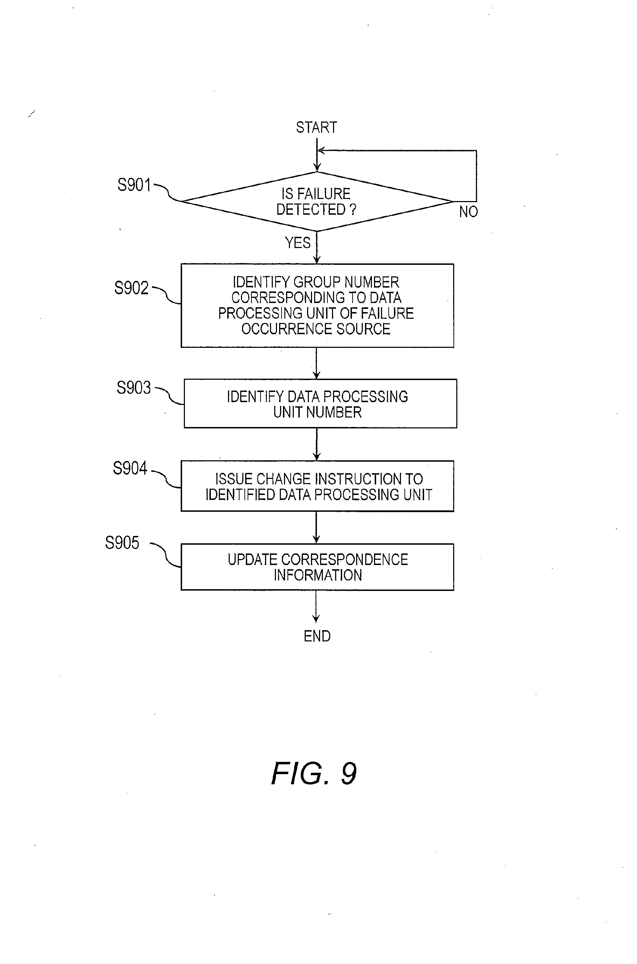

FIG. 8 is an explanatory diagram for illustrating the operations carried out when a failure occurs in a data processing unit. FIG. 9 is a flowchart for illustrating an operation procedure example when a failure occurs in a data processing unit. In FIG. 8, a failure has occurred in the data processing unit 103-3. The control unit 101 monitors the data processing units 103-1 to 103-4 (Step S901: No). When the control unit 101 detects a failure in the data processing unit 103-3 (Step S901: Yes), the first identification module 601 accesses the correspondence information 122 of the distributed processing unit 102-*i*, and identifies the group numbers "3" and "7" corresponding to the data processing unit number "3" in the correspondence information 122 (Step S902). The identified group numbers serve as numbers indicating the affiliated groups of the redundant data clusters in the group information 610.

Then, the control unit 101 refers to the group information 610 with the second identification module 602, and identifies the data processing units 103-*j* corresponding to the identified group numbers "3" and "7" (Step S903). Consequently, the storage destinations of the session information cluster S3-2 of the group 3 and the session information cluster S7-2 of the group 7, which are respectively duplicates of the session information cluster S3-1 of the group 3 and the session information cluster S7-1 of the group 7 in the operational data cluster set R1-3 of the data processing unit 103-3, are identified as data processing units 103-4 and 103-1.

Then, the control unit 101 transmits a data migration instruction to the identified data processing unit 103-4 (Step S904). As a result, the data processing unit 103-4 changes the session information cluster S3-2 of the group 3 in the redundant data cluster set R2-4 to the session information cluster S3-1 of the group 3 to be an operational data cluster. Similarly, the control unit 101 transmits a data migration instruction to the identified data processing unit 103-1 (Step S904). As a result, the data processing unit 103-1 changes the session information cluster S7-2 of the group 7 in the redundant data cluster set R2-1 to the session information cluster S7-1 of the group 7 to be an operational data cluster.

When the changes performed by the data processing units 103-4 and 103-1, respectively, are complete, the control unit 101 instructs the distributed processing unit 102-*i* to update the correspondence information 122. The distributed processing unit 102-*i* updates the data processing unit number *j* corresponding to the group number "3" from "3" to "4", and updates the data processing unit number *j* corresponding to the group number "7" from "3" to "1" with the correspondence information update module 614 (Step S905). As a result, the state after the change of the redundant data clusters is reflected in the correspondence information 122.

Then, when a packet is received, the distributed processing unit 102-*i* provides characteristic information about the packet, such as the destination address, to the hash function 121, and calculates a hash value. In this example, the hash value "3" is calculated by the hash function 121. Further, the distributed processing unit 102-*i* takes the data processing unit number "4" corresponding to the group number "3", which is the hash value, by referring to the correspondence information 122. As a result, the distributed processing unit 102-*i* transfers the packet to the data processing unit 103-4. The data processing unit 103-4 processes the transferred packet with the packet processing module 130, and adds or updates the obtained session information to the session information cluster of the group 3. Consequently, the recovery task resulting from the occurrence of a failure in the data processing unit 103-3 is completed.

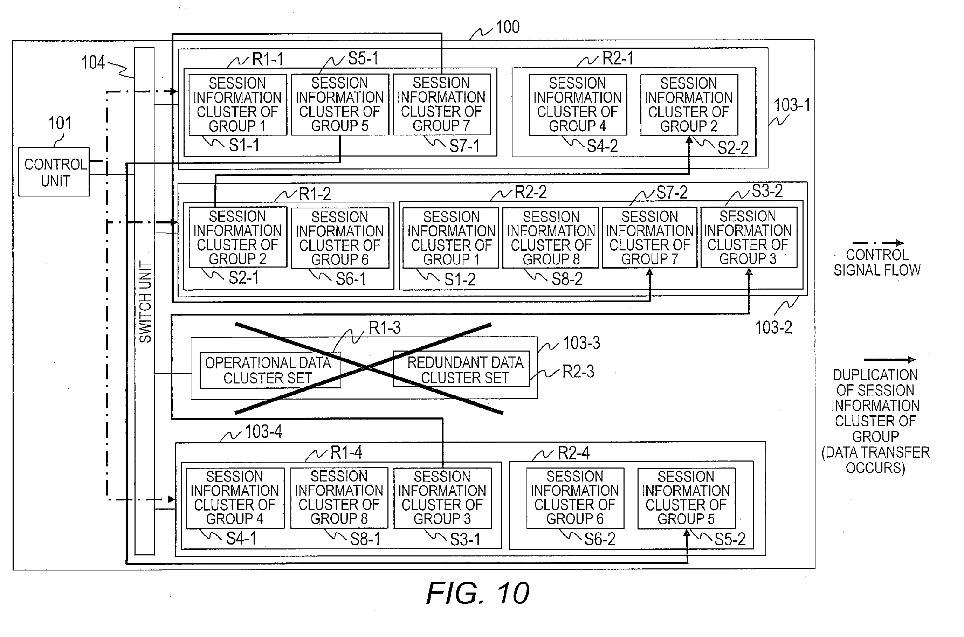

FIG. 10 is an explanatory diagram for illustrating a redundancy reconstruction example after the recovery of FIG. 8. In FIG. 8, recovery from the occurrence of a failure in the data processing unit 103-3 is performed. However, if a failure occurs in any one of the remaining data processing units 103-1, 103-2, and 103-4, recovery cannot be carried out. Therefore, redundancy reconstruction is needed for the remaining data processing units 103-1, 103-2, and 103-4.

In the state after the recovery of FIG. 8, the redundant data clusters for the session information clusters of the groups 2, 3, 5, and 7, which have been held by the data processing unit 103-3, are lost. Therefore, the management apparatus 100 executes redundancy reconstruction by duplicating the operational data clusters stored in the remaining data processing units 103-1, 103-2, and 103-4. Executing redundancy reconstruction by duplicating only the operational data clusters whose redundant data clusters have been lost allows the data transfer amount to be suppressed to the minimum required level. During this processing, in order to smooth out unevenness among the redundant data clusters, it is preferred to allocate the duplicated redundant data clusters in order of the data processing unit having fewer redundant data clusters.

The control unit 101 issues an instruction to the data processing unit 103-1 to perform redundancy reconstruction. The data processing unit 103-1 receives this instruction, and selects the operational data clusters to be duplicated in the other data processing units 103-2 and 103-4. Because the session information cluster S1-1 of the group 1 is already redundant in the data processing unit 103-2 as the session information cluster S1-2 of the group 1, the session information cluster S1-1 of the group 1 is not duplicated.

A redundant data cluster of the session information cluster S5-1 of the group 5 is not stored in any of the data processing units, and hence the data processing unit 103-1 writes the session information cluster S5-2 of the group 5, which is a redundant data cluster duplicated from the session information cluster S5-1 of the group 5, in the data processing unit 103-4 having few redundant data clusters.

Similarly, a redundant data cluster of the session information cluster S7-1 of the group 7 is not stored in any of the data processing units, and hence the data processing unit 103-1 writes the session information cluster S7-2 of the group 7, which is a redundant data cluster duplicated from the session information cluster S7-1 of the group 7, in the data processing unit 103-2.

Further, the control unit 101 issues an instruction to the data processing unit 103-2 to perform redundancy reconstruction. The data processing unit 103-2 receives this instruction, and selects the operational data clusters to be duplicated in the other data processing units 103-1 and 103-4. Because the session information cluster S6-1 of the group 6 is already redundant in the data processing unit 103-4 as the session information cluster S6-2 of the group 6, the session information cluster S6-1 of the group 6 is not duplicated.

A redundant data cluster of the session information cluster S2-1 of the group 2 is not stored in any of the data processing units 103-*j*, and hence the data processing unit 103-2 writes the session information cluster S2-2 of the group 2, which is a redundant data cluster duplicated from the session information cluster S2-1 of the group 2, in the data processing unit 103-1 having few redundant data clusters.

Further, the control unit 101 issues an instruction to the data processing unit 103-4 to perform redundancy reconstruction. The data processing unit 103-4 receives this instruction, and selects the operational data clusters to be duplicated in the other data processing units 103-1 and 103-2. Because the session information cluster S4-1 of the group 4 is already redundant in the data processing unit 103-1 as the session information cluster S4-2 of the group 4, the session information cluster S4-1 of the group 4 is not duplicated.

In addition, because the session information cluster S8-1 of the group 8 is already redundant in the data processing unit 103-2 as the session information cluster S8-2 of the group 8, the session information cluster S8-1 of the group 8 is not duplicated.

A redundant data cluster of the session information cluster S3-1 of the group 3 is not stored in any of the data processing units 103-*j*, and hence the data processing unit 103-4 writes the session information cluster S3-2 of the group 3, which is a redundant data cluster duplicated from the session information cluster S3-1 of the group 3, in the data processing unit 103-2. Because the number of session information clusters is the same, the session information cluster S3-2 may also be written to the data processing unit 103-1. Then, the control unit 101 updates the group information 610.

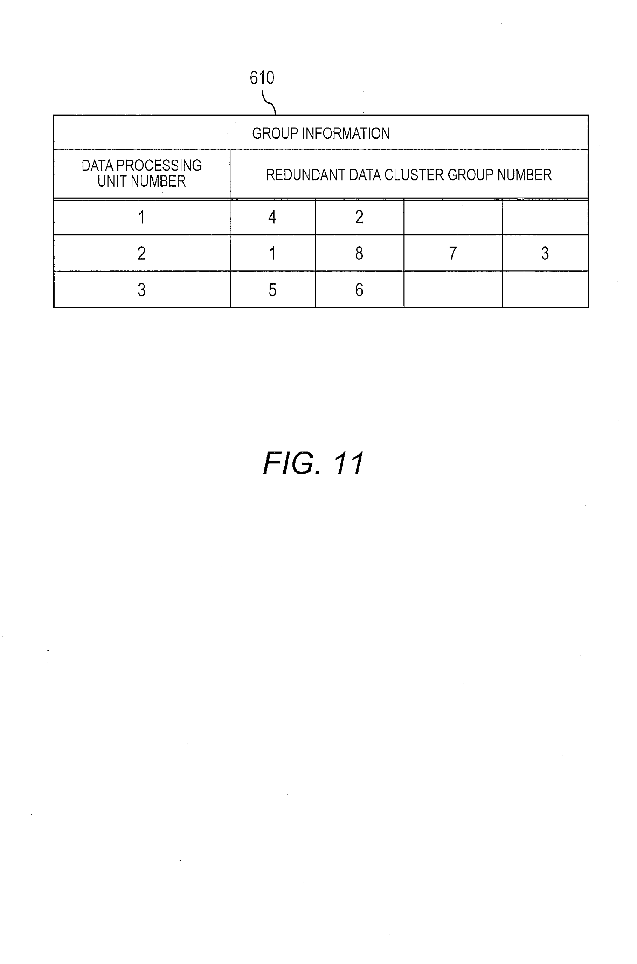

FIG. 11 is an explanatory diagram for showing a state after update of the group information 610 by the redundancy reconstruction performed in FIG. 10. Consequently, after a failure has occurred in the data processing unit 103-3, recovery can still be carried out even if another failure occurs in any one of the remaining data processing units.

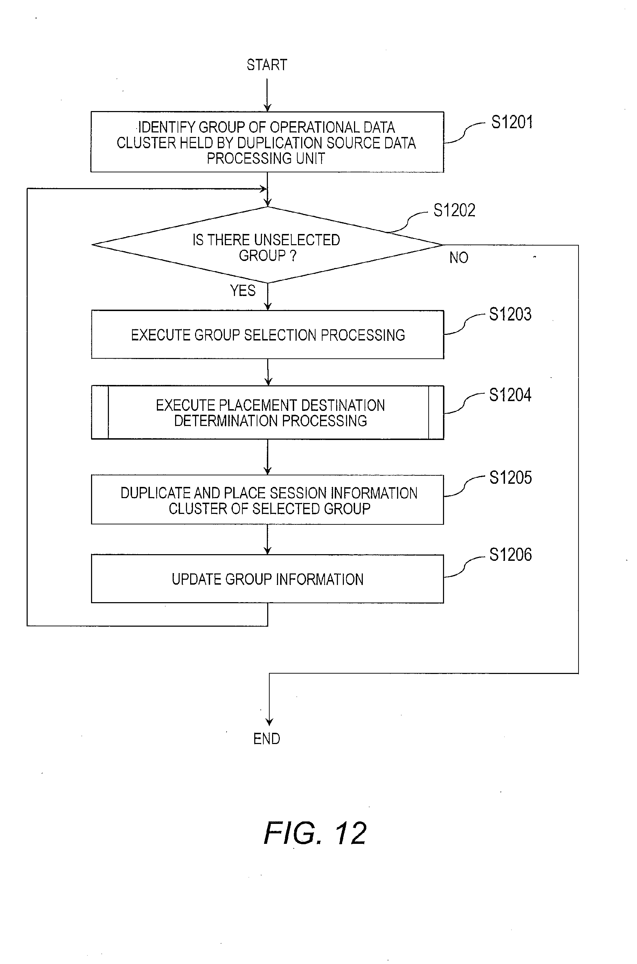

FIG. 12 is a flowchart for illustrating an example of the redundancy reconstruction processing illustrated in FIG. 10 by the construction module 604. First, the construction module 604 identifies the affiliated group number of the operational data cluster held by the duplication source data processing unit (Step S1201). By referring to the correspondence information 122 after the update of FIG. 10, the construction module 604 can identify which data processing unit 103-*j* is storing the operational data cluster of which group.

Next, the construction module 604 determines whether or not there is an unselected group (Step S1202). When there is an unselected group (Step S1202: Yes), the construction module 604 executes group selection processing for selecting one unselected group (Step S1203). The selection criteria to be used may be, for example, an ascending order or a descending order of the group numbers. Alternatively, the selection may be carried out based on the group number of the group that the data processing unit 103-*j* selected based on an ascending order or a descending order of the data processing unit numbers *j* is responsible for. In addition, the selection may also be carried out in ascending order of the number of pieces of session information in a group.

Then, the construction module 604 executes placement destination determination processing (Step S1204). Although the details of the placement destination determination processing (Step S1204) are described later, in placement destination determination processing (Step S1204), the construction module 604 determines the placement destination of a redundant data cluster, which is a duplicate of an operational data cluster belonging to a selected group, so that the load on each data processing unit 103-*j* is equal.

Next, the construction module 604 duplicates the operational data cluster belonging to the selected group, and places the redundant data cluster, which is a duplicate, in the determined placement destination (Step S1205). Then, as shown in FIG. 11, the group information update module 605 updates the group information 610 to a post-change state (Step S1206), and the processing returns to Step S1202. When it is determined in Step S1202 that there are no unselected groups (Step S1202: No), the redundancy reconstruction processing is finished.

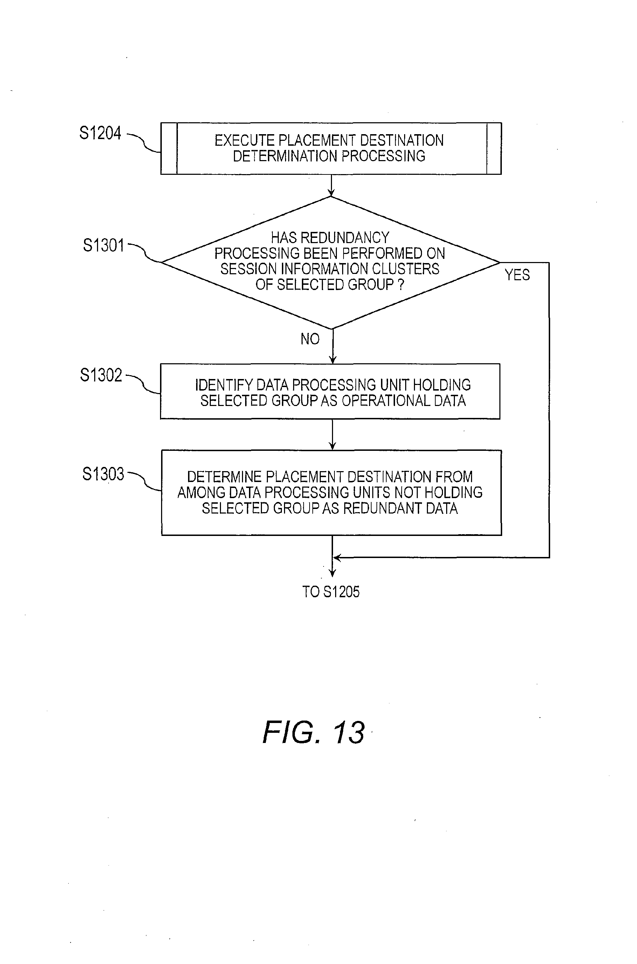

FIG. 13 is a flowchart for illustrating in detail a processing procedure example of the placement destination determination processing (Step S1204) illustrated in FIG. 12. First, the construction module 604 determines whether or not redundancy processing has been performed on the operational data cluster of the selected group (Step S1301). When redundancy processing has been performed on the operational data cluster of the selected group (Step S1301: Yes), the placement destination determination processing (Step S1204) for the selected group is finished, and the processing proceeds to Step S1205.

On the other hand, when redundancy processing has not been performed on the operational data cluster of the selected group (Step S1301: No), the construction module 604 identifies the data processing unit 103-*j* holding the selected group as an operational data cluster (Step S1302). For example, in the case of the group 5, in FIG. 10, the construction module 604 identifies that the session information cluster S5-1 of the group 5, which is an operational data cluster, is stored in the data processing unit 103-1 by referring to the correspondence information 122.

Next, the construction module 604 determines the data processing unit 103-*j* to be the placement destination of the redundant data cluster from among the data processing units 103-*j* that do not hold the selected group as a redundant data cluster (Step S1303). Specifically, for example, the construction module 604 determines the data processing unit 103-*j* to be the placement destination of the redundant data cluster based on an ascending order or a descending order of the data processing unit number j. Alternatively, the construction module 604 may determine a data processing unit 103-*j* having few redundant data clusters to be the placement destination. In addition, this determination may also be made based on which data processing unit 103-*j* has a higher specification or in ascending order of CPU utilization rate of the data processing units.

For example, in the case of the group 5, in FIG. 10, the data processing units 103-2 and 103-4 are placement destination candidates of the session information cluster S5-2 of the group 5, which is a redundant data cluster of the session information cluster S5-1 of the group 5. However, in FIG. 10, the data processing unit 103-4, which has fewer redundant data clusters, is selected. As a result of this processing, the placement destination determination processing (Step S1204) is finished.

Thus, according to the first embodiment, the load on the data processing units 103-*j* can be distributed more precisely. Further, in the first embodiment, although recovery and redundancy reconstruction are executed when a failure occurs, recovery and redundancy reconstruction may also be carried out when stopping a data processing unit for maintenance.

Next, redundancy reconstruction performed when increasing the number of data processing units 103-*j* is described. When a data processing unit 103-*j* is to be added, because groups have not yet been allocated to the added data processing unit 103-*j*, the management apparatus 100 places operational data clusters and redundant data clusters in the added data processing unit 103-*j* so that the load is equal among all the data processing units 103-*j*. As a result, even when a failure occurs after the data processing unit 103-*j* has been added or when performing maintenance, recovery and redundancy reconstruction can be carried out in the same manner as in the first embodiment.

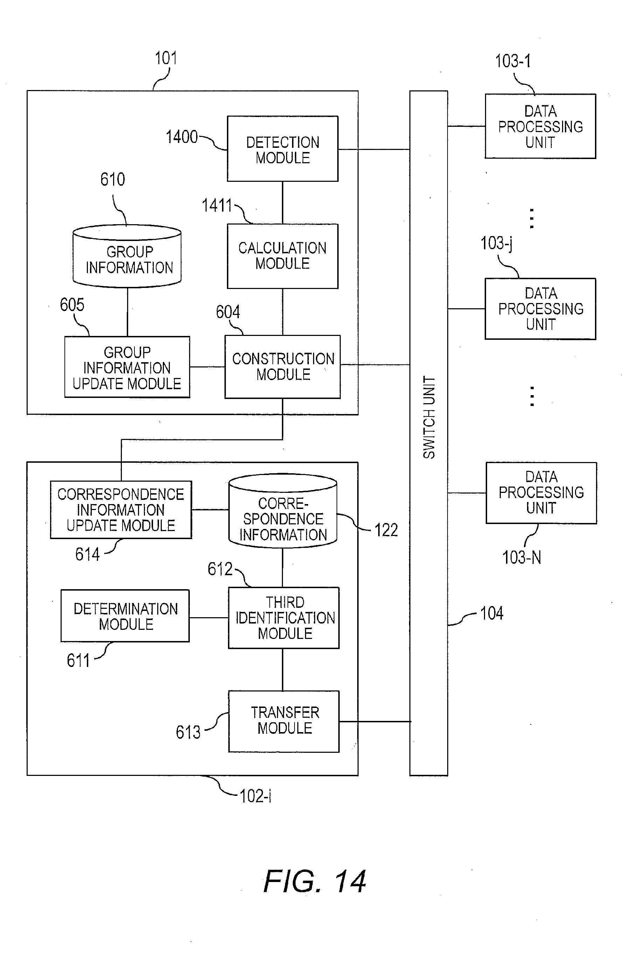

FIG. 14 is a block diagram for illustrating a functional configuration example 2 of the control unit 101 and the distributed processing unit 102-*i* according to the first embodiment. The control unit 101 includes the group information 610, a detection module 1400, a calculation module 1411, the construction module 604, and the group information update module 605. The functions of the detection module 1400 and the calculation module 1411 are specifically realized by, for example, the processor 501 executing programs stored in the storage device 502 illustrated in FIG. 5.

The detection module 1400 is configured to detect the addition of a data processing unit 103-*j*. Specifically, for example, the detection module 1400 detects the addition of a data processing unit 103-*j* when a data processing unit 103-*j* is added to an empty slot of the switch unit 104.

The calculation module 1411 is configured to calculate, when the addition of a data processing unit 103-*k* has been detected by the detection module 1400, the number of groups of operational data clusters and the number of groups of redundant data clusters to be stored by the added data processing unit 103-*k* based on the total number of groups and the total number of data processing units 103-*j* including the added data processing unit 103-*k*. Specifically, for example, the calculation module 1411 calculates the number of groups of operational data clusters and the number of groups of redundant data clusters to be stored by the added data processing unit 103-*k* by dividing the total number of groups by the total number of data processing units 103-*j* including the added data processing unit 103-*k*. By calculating the number of groups that the added data processing unit 103-*k* is to store, and migrating the calculated number of groups of operational data clusters and redundant data clusters, the data transfer amount required for redundancy reconstruction can be suppressed.

The total number of groups is the total number of affiliated groups of the operational data clusters stored by the plurality of data processing units 103-1 to 103-*N*. Using the first embodiment as an example, the total number of groups is "8". Further, when the total number of data processing units 103-*j* before addition is "3", and one data processing unit is added, then the total number of data processing units 103-*j* including the added data processing unit 103-*k* is "4".

Therefore, the calculation module 1411 divides "8" as the total number of groups by "4" as the total number of data processing units 103-*j* including the added data processing unit 103-*k*, to calculate "2" as the number of groups of operational data clusters and the number of groups of redundant data clusters that the added data processing unit 103-*k* is to store.

The construction module 604 executes the redundancy reconstruction processing based on the calculation result by the calculation module 1411. The processing content of the redundancy reconstruction processing is the same as the processing in the first embodiment, in which redundancy reconstruction is executed based on the number of groups of operational data clusters and the number of groups of redundant data clusters in each data processing unit 103-*j*. In the case of the above-mentioned calculation example, for each of the data processing units 103-1 to 103-4, the number of groups of operational data clusters is "2" and the number of groups of redundant data clusters is "2". Further, similarly to the first embodiment, each data processing unit is constructed so that the groups of the operational data clusters and the groups of the redundant data clusters are different therein.

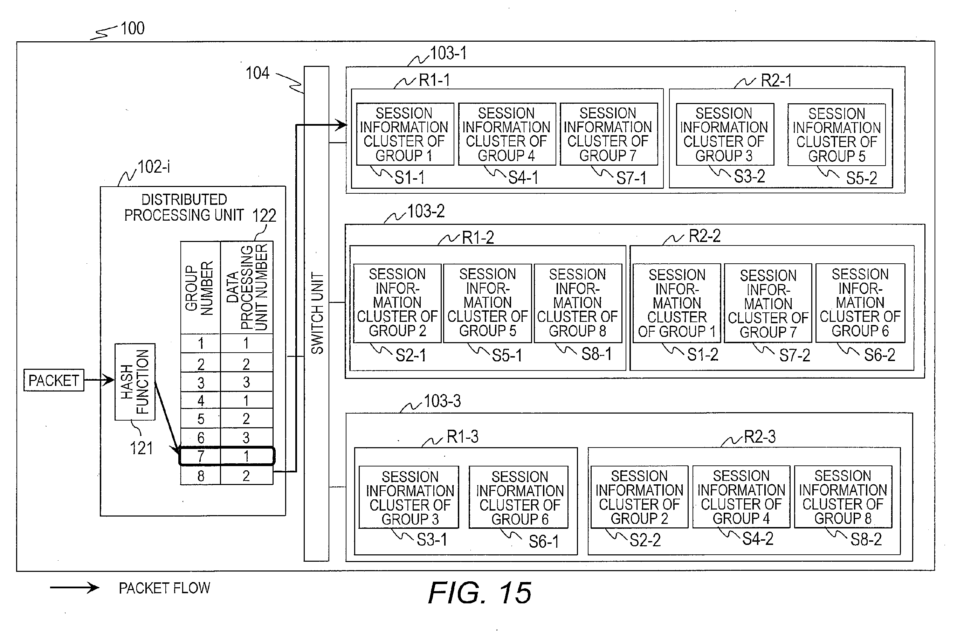

FIG. 15 is an explanatory diagram (part 1) for illustrating a redundancy reconstruction example when the number of data processing units 103-*j* is increased. FIG. 15 is an illustration of the state before redundancy reconstruction. The data processing units 103-1 to 103-3 are the currently existing data processing units. When a packet is received by the distributed processing unit 102-*i*, the distributed processing unit 102-*i* provides characteristic information about the packet, such as the destination address, to the hash function 121, and calculates a hash value. In this case, a hash value of "7" is calculated by the hash function 121. Then, the distributed processing unit 102-*i* takes the data processing unit number "*j*=1" corresponding to the group number "7", which is the hash value, by referring to the correspondence information 122. As a result, the distributed processing unit 102-*i* transfers the packet to the data processing unit 103-1. The data processing unit 103-1 processes the transferred packet with the packet processing module 130, and adds or updates the obtained session information to the session information cluster of the group 7.

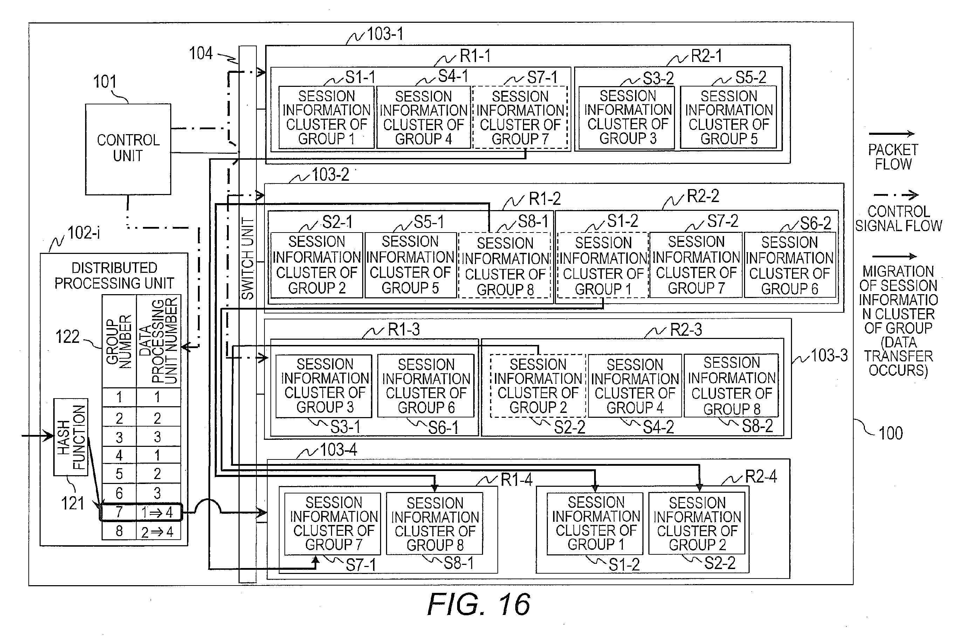

FIG. 16 is an explanatory diagram (part 2) for illustrating a redundancy reconstruction example when the number of data processing units is increased. FIG. 16 is an illustration of the next state after the state of FIG. 15. The data processing unit 103-4 is a newly added data processing unit. The control unit 101 transmits a data migration instruction to the currently existing data processing unit 103-1. The data processing unit 103-1 confirms the number of groups of operational data clusters and the number of groups of redundant data clusters. Because the number of groups is changed to "2", one operational data cluster is migrated from the operational data cluster set R1-1. In the case of FIG. 16, for example, the data processing unit 103-1 migrates the session information cluster S7-1 of the group 7, which is an operational data cluster, to the added data processing unit 103-4.

Further, the control unit 101 transmits a data migration instruction to the currently existing data processing unit 103-2. The data processing unit 103-2 confirms the number of groups of operational data clusters and the number of groups of redundant data clusters. Because the number of groups is changed to "2", one operational data cluster is migrated from the operational data cluster set. In the case of FIG. 16, for example, the data processing unit 103-2 migrates the session information cluster S8-1 of the group 8, which is an operational data cluster, to the added data processing unit 103-4.

Further, one redundant data cluster is migrated from the redundant data cluster set R2-*j*. In the case of FIG. 16, for example, the data processing unit 103-2 migrates the session information cluster S1-2 of the group 1, which is a redundant data cluster, to the added data processing unit 103-4.

Further, the control unit 101 transmits a data migration instruction to the currently existing data processing unit 103-3. The data processing unit 103-3 confirms the number of groups of operational data clusters and the number of groups of redundant data clusters. Because the number of groups is changed to "2", one redundant data cluster is migrated from the redundant data cluster set. In the case of FIG. 16, for example, the data processing unit 103-3 migrates the session information cluster S2-2 of the group 2, which is a redundant data cluster, to the added data processing unit 103-4.

Then, the control unit 101 transmits an instruction to the distributed processing unit 102-*i* to update the correspondence information 122. The distributed processing unit 102-*i* updates the data processing unit number j corresponding to the group number "7" from "1" to the data processing unit number "4" of the added data processing unit. Similarly, the distributed processing unit 102-*i* updates the data processing unit number j corresponding to the group number "8" from "2" to the data processing unit number "4" of the added data processing unit. Then, the control unit 101 updates the group information 610.

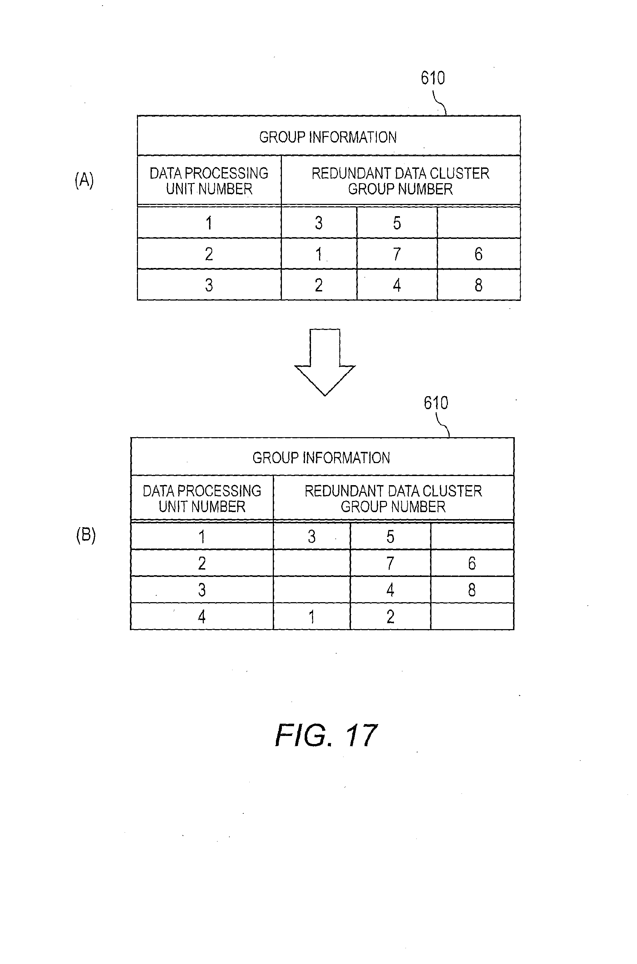

FIG. 17 is an explanatory diagram for showing an update example of the group information 610. In part (A) of FIG. 17, a state before the update is shown, which corresponds to FIG. 15. In part (B) of FIG. 17, a state after the update is shown, which corresponds to FIG. 16.

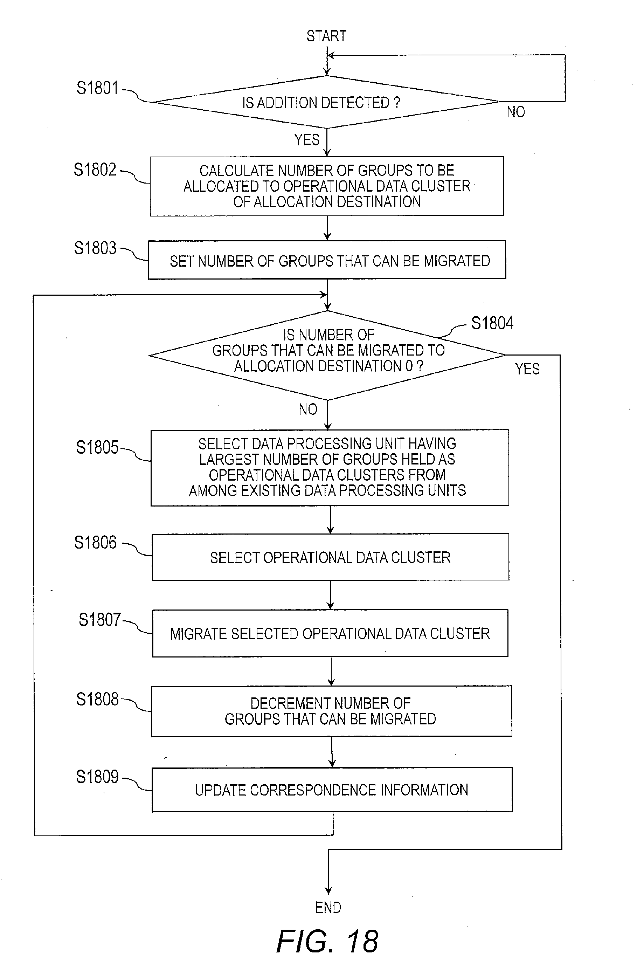

FIG. 18 is a flowchart for illustrating a redundancy reconstruction procedure example of the operational data clusters. First, the control unit 101 monitors with the detection module 1400 whether or not a data processing unit 103-*k* has been added (Step S1801: No). When a data processing unit 103-*k* is detected as having been added (Step S1801: Yes), the control unit 101 calculates with the calculation module 1411 the number of groups of operational data clusters to be migrated to the added data processing unit 103-*k* (Step S1802).

Then, the control unit 101 sets the calculated number of groups as the number of groups that can be migrated (Step S1803). The number of groups that can be migrated is a value that has the calculated number of groups as an upper limit and decreases each time an operational data cluster is allocated. When the number of groups that can be migrated reaches 0 (Step S1804: Yes), because there are no operational data clusters to be migrated, the redundancy reconstruction processing is finished.

When the number of groups that can be migrated is not 0 (Step S1804: No), the construction module 604 selects the data processing unit having the largest number of groups held as operational data clusters from among the currently existing data processing units (Step S1805). In the case of FIG. 16, the data processing unit 103-1 or the data processing unit 103-2 is selected.

Next, the construction module 604 selects an operational data cluster in the selected data processing module 103-*j* to be migrated to the added data processing unit 103-*k* (Step S1806). In the case of FIG. 16, when the data processing unit 103-1 is selected, the session information cluster S7-1 of the group 7 is selected.

Then, the construction module 604 migrates the selected operational data cluster to the added data processing unit with the selected data processing unit 103-*j* (Step S1807). In the case of FIG. 16, the selected session information cluster S7-1 of the group 7 is migrated to the added data processing unit 103-4.

Then, the construction module 604 decrements the number of groups that can be migrated by 1 (Step S1808), the correspondence information update module 614 updates the correspondence information 122 as illustrated in FIG. 16 (Step S1809), and the processing returns to Step S1803. In Step S1803, when the number of groups that can be migrated has reached 0 (Step S1804: Yes), the series of processes is finished. Based on this processing, the operational data clusters are distributed to match the calculated number of groups.

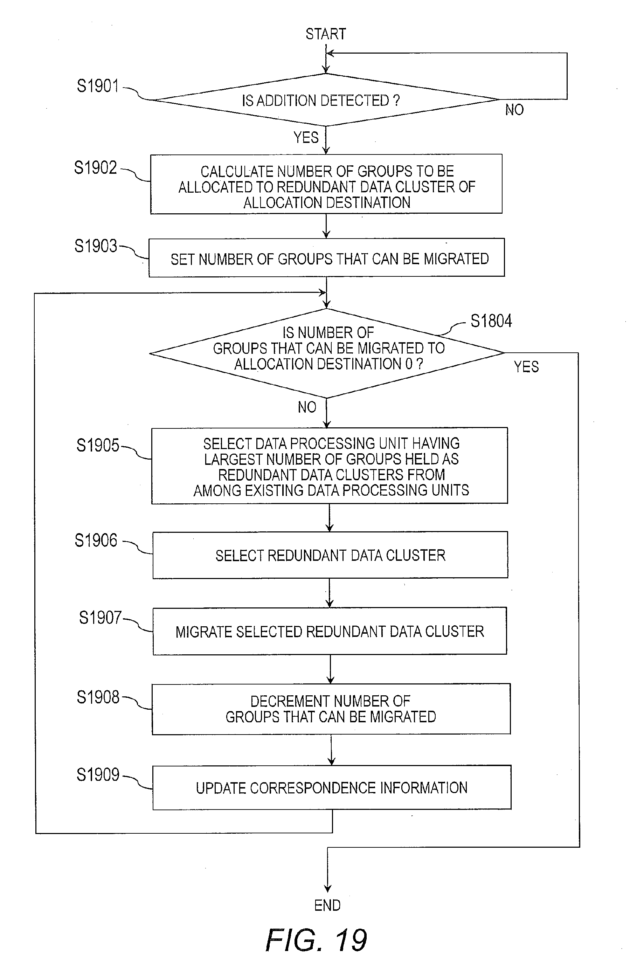

FIG. 19 is a flowchart for illustrating a redundancy reconstruction procedure example of the redundant data clusters. First, the control unit 101 monitors with the detection module 1400 whether or not a data processing unit 103-*k* has been added (Step S1901: No). When a data processing unit 103-*k* is detected as having been added (Step S1901: Yes), the control unit 101 calculates with the calculation module 1411 the number of groups of redundant data clusters to be migrated to the added data processing unit 103-*k* (Step S1902).

Then, the control unit 101 sets the calculated number of groups as the number of groups that can be migrated (Step S1903). The number of groups that can be migrated is a value that has the calculated number of groups as an upper limit and decreases each time a redundant data cluster is allocated. When the number of groups that can be migrated reaches 0 (Step S1904: Yes), because there are no redundant data clusters to be migrated, the redundancy reconstruction processing is finished.

When the number of groups that can be migrated is not 0 (Step S1904: No), the construction module 604 selects the data processing unit 103-*j* having the largest number of groups held as redundant data clusters from among the currently existing data processing units 103-*j* (Step S1905). In the case of FIG. 16, the data processing unit 103-2 or the data processing unit 103-3 is selected.

Next, the construction module 604 selects a redundant data cluster in the selected data processing module 103-*j* to be migrated to the added data processing unit 103-*k* (Step S1906). In the case of FIG. 16, when the data processing unit 103-2 is selected, the session information cluster S1-2 of the group 1 is selected.

Then, the construction module 604 migrates the selected redundant data cluster to the added data processing unit 103-*k* with the selected data processing unit 103-*j* (Step S1907). In the case of FIG. 16, the selected session information cluster S1-2 of the group 1 is migrated to the added data processing unit 103-4.

Then, the construction module 604 decrements the number of groups that can be migrated by 1 (Step S1908), the group information update module 605 updates the group information 610 as illustrated in FIG. 17 (Step S1909), and the processing returns to Step S1903. In Step S1903, when the number of groups that can be migrated has reached 0 (Step S1904: Yes), the series of processes is finished. Based on this processing, the redundant data clusters are distributed to match the calculated number of groups.

It should be noted that in FIGS. 18 and 19, although redundancy reconstruction is carried out so that the number of groups is equal, the redundancy reconstruction may also be carried out so that the number of pieces of session information is equal or the CPU utilization rate is equal.

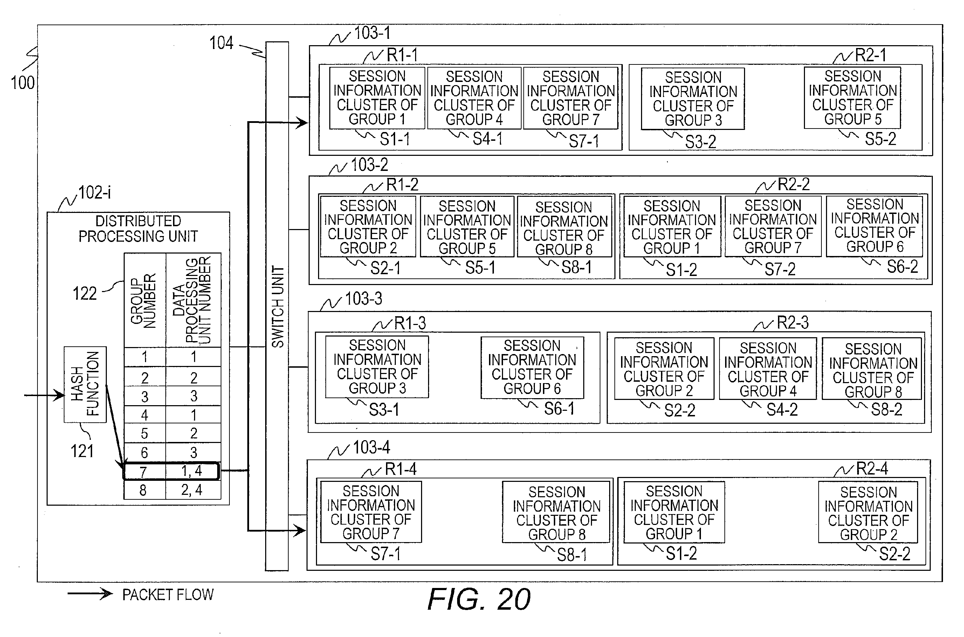

FIG. 20 is an explanatory diagram for illustrating another example of redundancy reconstruction. In FIG. 16, the distributed processing unit 102-*i* updates the correspondence information 122 based on a reconstruction result after redundancy reconstruction. However, during updating of the correspondence information 122, the distributed processing unit 102-*i* cannot transfer packets to the data processing units 103-*j*, which can cause packets to be lost. Consequently, when a new data processing unit number *j* is added, the correspondence information update module 614 holds the old data processing unit number *j* for a fixed period of time without deleting the old data processing unit number *j*. As a result, during updating, the old data processing unit number *j* can be referred to, allowing packet loss to be suppressed. Further, after the update, the new data processing unit number data j is referred to. When the fixed period of time has elapsed after the update, the correspondence information update module 614 deletes the old data processing unit number *j*.

Further, in the above-mentioned first embodiment, the referencing and the updating are carried out using one type of correspondence information 122. However, two types of correspondence information 122, for reference and for updating, may be prepared, and the type of the correspondence information 122 may be switched each time an update is carried out.

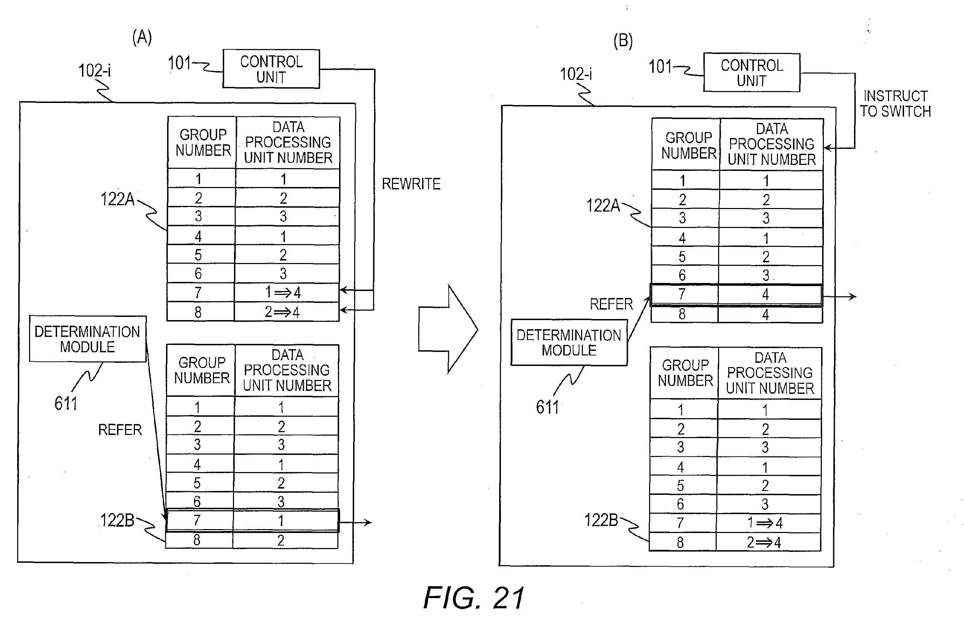

FIG. 21 is an explanatory diagram for illustrating a switching example of the correspondence information 122. The distributed processing unit 102-*i* includes first correspondence information 122A and second correspondence information 122B. In part (A) of FIG. 21, the first correspondence information 122A is correspondence information 122 for updating and the second correspondence information 122B is correspondence information 122 for reference. The distributed processing unit 102-*i* determines the data processing unit to be the transfer destination of the received packet by referring to the second correspondence information 122B, which is for reference, and transfers the packet to the determined data processing unit. When an update of the first correspondence information 122A occurs, the first correspondence information 122A is updated. During updating, the distributed processing unit 102-*i* refers to the second correspondence information 122B.

When the update is complete, the control unit 101 switches correspondence information for reference and the correspondence information for updating. In other words, the control unit 101 switches the first correspondence information 122A to that for reference, and switches the second correspondence information 122B to that for updating. The result is illustrated in part (B) of FIG. 21. Consequently, the occurrence of packet loss can be suppressed because packets only need to be buffered by the distributed processing unit 102-*i* for the time during which the correspondence information 122 is being switched.

### (Second Embodiment)

A second embodiment of this invention is now described. In the first embodiment, the management apparatus 100 includes a single control unit 101. However, the second embodiment is an example in which each data processing unit includes a control unit 101 having the same functions. In other words, in the second embodiment, configuration management is performed based on distributed control by the plurality of data processing units 103-1 to 103-*N* without preparing hardware resources dedicated for the control unit 101. It should be noted that parts that are the same as in the first embodiment are denoted by the same reference numerals, and a description thereof is omitted here.

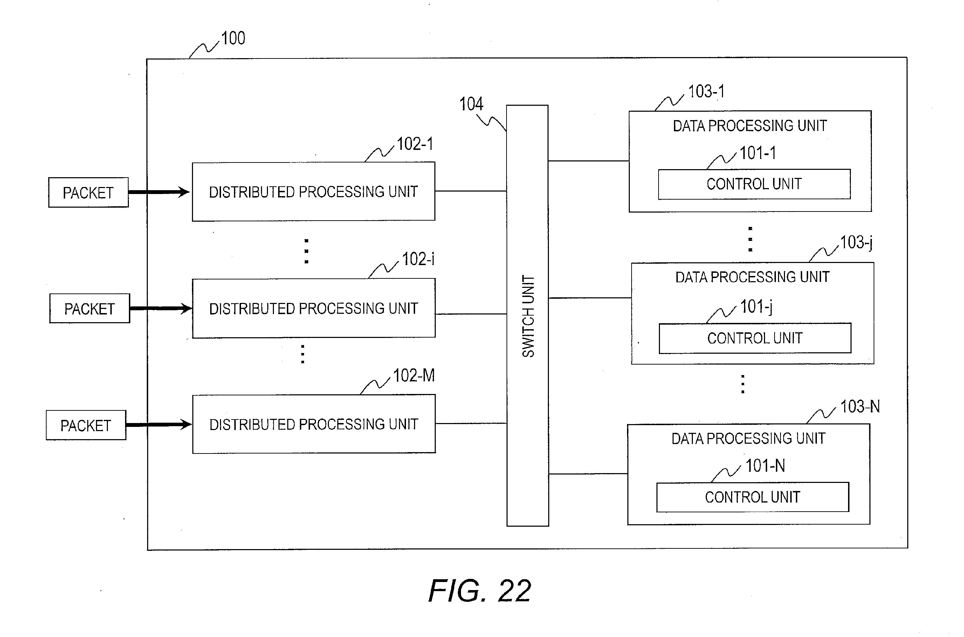

FIG. 22 is a block diagram for illustrating the management apparatus 100 according to the second embodiment. Each data processing unit 103-*j* includes a control unit 101-*j*. The functions of the control unit 101-*j* are the same as the functions of the control unit 101 according to the first embodiment. The algorithms of the control units 101-*j* do not depend on the data processing unit executing the algorithms or the time at which the algorithms are executed. Therefore, if the content of the information to be referenced is the same, generally the same calculation result is obtained.

When an arbitrary data processing unit 103-*j* has failed, each control unit 101-*k* of the existing data processing units 103-*k* (*k≠j*) execute recovery and redundancy reconstruction. Each data processing unit 103-*k* acquires the same result, and performs duplication of the required session information.

Further, when a data processing unit is to be newly added, the newly added data processing unit sends information indicating a new addition to the currently existing data processing units 103-*j*, and the control unit 101-*k* of each data processing unit 103-*j* performs redundancy reconstruction. In addition, as another example, a control unit 101-*j* may be set as a representative among the plurality of control units 101-*j*, and the representative control unit 101-*j* may update the group information 610 of the other control units 101. Still further, the other control units 101-*j* may update the group information 610 of a predetermined control unit 101-*j* as an update target.

Thus, according to the second embodiment, the management apparatus 100 can be configured without preparing hardware resources dedicated for the control unit 101. Further, by carrying out distributed control with the plurality of data processing units 103-1 to 103-*N* rather than concentrated control by one control unit 101, an improvement in the fault tolerance relating to configuration management can be achieved at a low cost.

### (Third Embodiment)

A third embodiment of this invention is now described. The third embodiment is an example in which the redundant data cluster set in each data processing unit 103-*j* is stored in the storage device 502. As a result, the memory capacity of each data processing unit 103-*j* can be reduced.

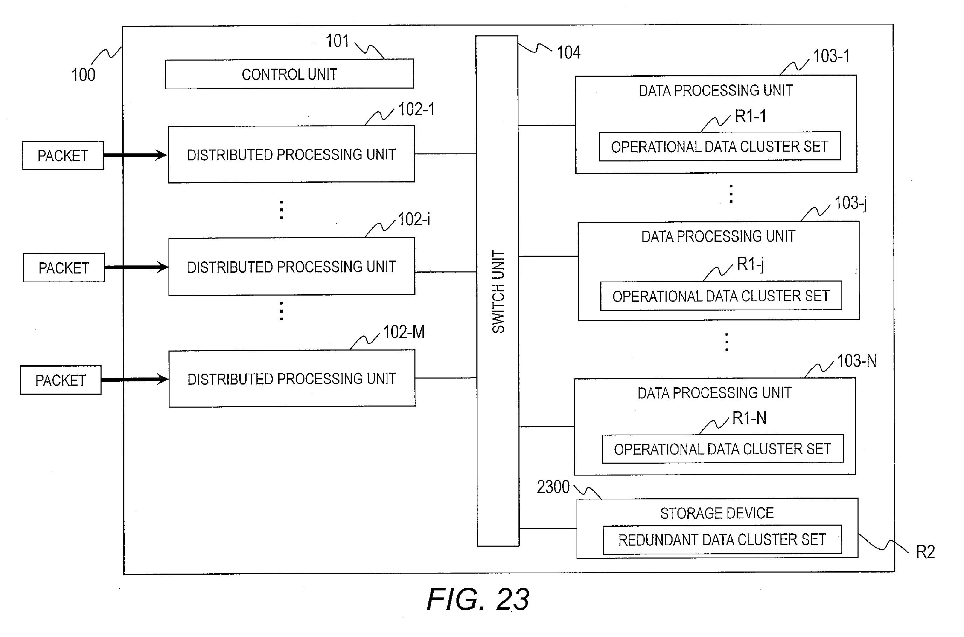

FIG. 23 is a block diagram for illustrating a configuration of the management apparatus 100 according to the third embodiment. The management apparatus 100 includes a storage device 2300 for storing a redundant data cluster set R2, which includes redundant data cluster sets R2-1 to R2-N of respective data processing units 103-*j*. The storage device 2300 is coupled to the switch unit 104.

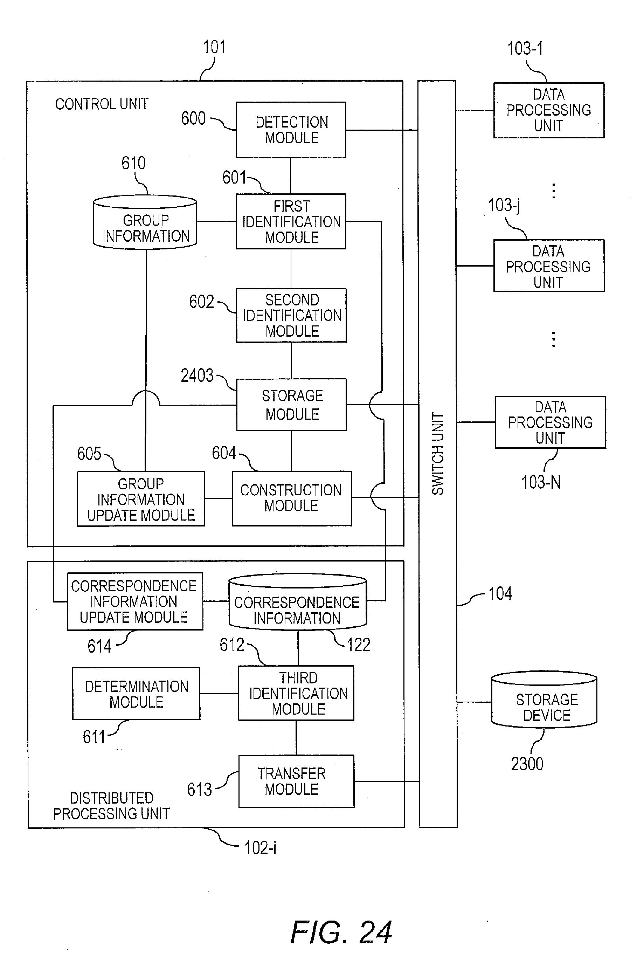

FIG. 24 is a block diagram for illustrating a functional configuration example 1 of the control unit 101 and the distributed processing unit 102-*i* according to the third embodiment. FIG. 24 corresponds to the functional configuration example 1 of FIG. 6 in the first embodiment. The same functions as the functions in FIG. 6 are denoted by the same reference symbols, and a description thereof is omitted here. It should be noted that the data processing units 103-*j* do not store redundant data clusters.

The control unit 101 includes a storage module 2403 in place of the change module 603. The storage module 2403 extracts from the storage device 2300 a redundant data cluster of the same group as the operational data cluster stored by any one of the data processing units 103-*j* for each of the plurality of data processing units 103-1 to 103-*N* identified by the second identification module 602. Then, the storage module 2403 stores the extracted redundant data cluster as an operational data cluster in the data processing unit corresponding to the affiliated group of the extracted redundant data cluster.

In other words, in the third embodiment, because redundant data cluster sets R2-*j* are all stored in the storage device 2300, rather than performing the operational/redundant setting change with the change module 603 as in the first embodiment, the redundant data clusters are stored as operational data clusters by transferring the data from the storage device 2300 to the data processing units 103-*j*.

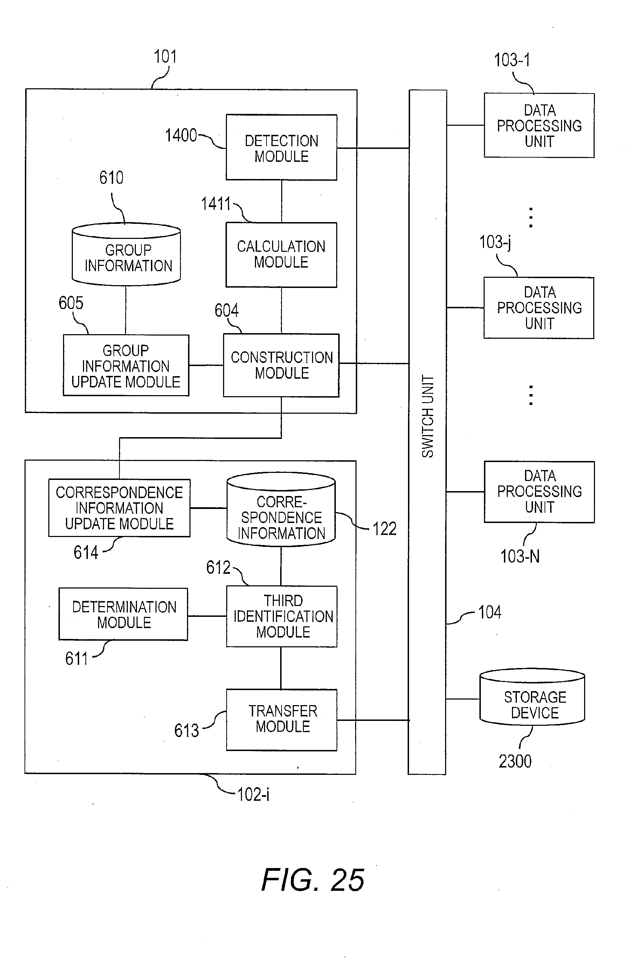

FIG. 25 is a block diagram for illustrating a functional configuration example 2 of the control unit 101 and the distributed processing unit 102-*i* according to the third embodiment. FIG. 25 corresponds to the functional configuration example 2 of FIG. 14 in the first embodiment. The same functions as the functions in FIG. 14 are denoted by the same reference symbols, and a description thereof is omitted here. In the first embodiment, the control unit 101 constructs the redundant data clusters in each data processing unit 103-*j* with the construction module 604. However, in the third embodiment, the construction destination of the redundant data clusters is the storage device 2300.

Thus, in the third embodiment, because the redundant data cluster set R2-*j* is stored in the storage device 2300 different from the data processing unit 103-*j*, the memory capacity of each data processing unit 103-*j* can be reduced.

### (Fourth Embodiment)

Next, a fourth embodiment of this invention is described. In the first embodiment, the management apparatus 100 is described. The fourth embodiment relates to a management system 2600, which includes the control unit 101, the distributed processing unit 102-*i*, and the data processing unit 103-*j* according to the first embodiment as a control apparatus 2601, a distributed processing apparatus 2602-*i*, and a data processing apparatus 2603-*j* in the form of independent apparatus, respectively.

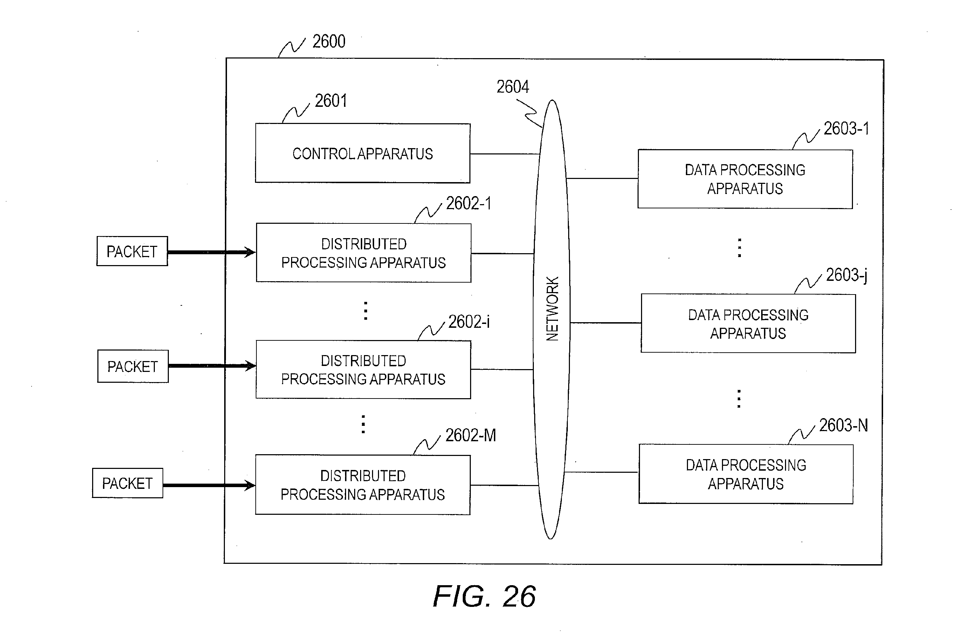

FIG. 26 is a block diagram for illustrating the management system according to the fourth embodiment. The management system 2600 includes the control apparatus 2601, the distributed processing apparatus 2602-*i*, and the data processing apparatus 2603-*j*. The control unit 2601, the distributed processing unit 2602-*i*, and the data processing apparatus 2603-*j* are communicably coupled to one another via a network 2604, such as a local area network (LAN) or the Internet. The processing content of the management system 2600 is the same as the processing in the first embodiment. It should be noted that the second embodiment and the third embodiment may also be applied in the management system 2600 according to the fourth embodiment. As a result, redundancy reconstruction can be applied even when each apparatus has been distributed.

### (Fifth Embodiment)

Next, a fifth embodiment of this invention is described. The fifth embodiment relates to a management system 2700, which includes the control unit 101 of the management apparatus 100 according to the first embodiment as an independent control apparatus 2601, and the management apparatus 100 without the control unit 101 as a processing apparatus 2701.

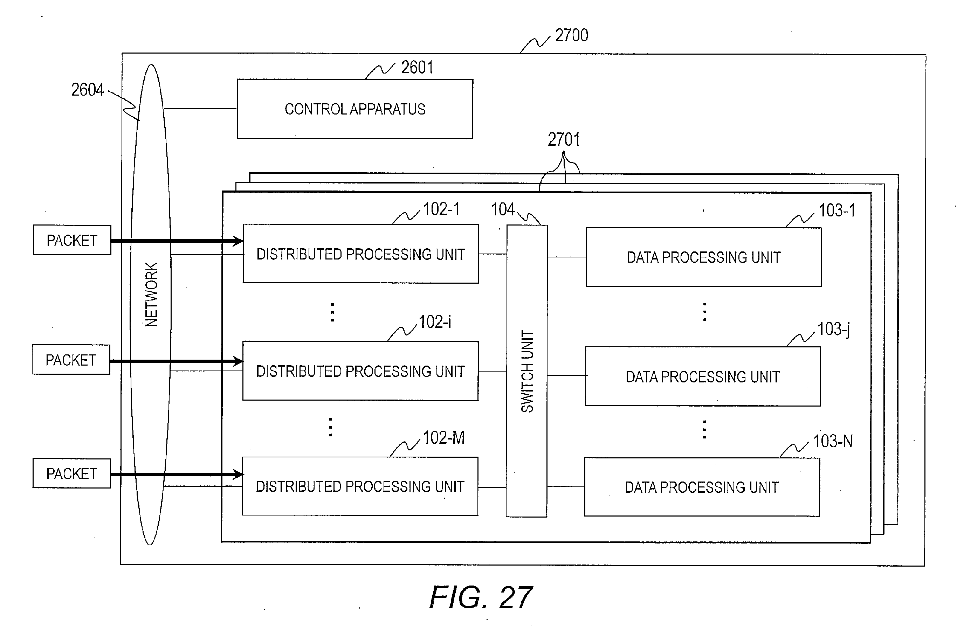

FIG. 27 is a block diagram for illustrating the management system according to the fifth embodiment. The management system 2700 is a system in which the control apparatus 2601 and a plurality of processing apparatus 2701 are communicably coupled to one another via a network 2604, such as a LAN or the Internet. The processing content of the management system 2600 is the same as the processing in the first embodiment. The control apparatus 2601 manages the plurality of processing apparatus 2701. It should be noted that the configurations of the second embodiment and the third embodiment may also be applied in the management system 2600 according to the fifth embodiment. When applied in the third embodiment, the storage device 502 may be provided in the processing apparatus, or provided external to the processing apparatus. Thus, one control apparatus 2601 is capable of managing a plurality of processing apparatus, which allows the costs of equipment expansion to be reduced.

As described above, according to the first to fifth embodiments of this invention, the load can be distributed more precisely in the redundant system reconstruction. More specifically, when increasing or decreasing the number of data processing units, the distribution destination can be changed so that the load of each data processing unit is equal and the redundant system can be reconstructed, without needing to transfer more data than necessary.

Further, input packets can be distributed by a simple step at each distributed processing unit, which enables fast distribution processing. Therefore, the distributed processing units can be realized at a low cost.

This invention has been described in detail so far with reference to the accompanying drawings, but this invention is not limited to those specific configurations described above, and includes various changes and equivalent components within the gist of the scope of claims appended.

## Claims

1. A management apparatus, including:
a plurality of data processing units, each of the plurality of data processing units, which are configured to execute data processing, being configured to, for a set of operational data clusters and a set of redundant data clusters that are the same as the operational data clusters, respectively, store a plurality of operational data clusters of groups different from groups of another data processing unit and store a plurality of redundant data clusters of groups different from the groups of the another data processing unit, each affiliated group of each of the plurality of operational data clusters stored in each of the plurality of data processing units being a group different from each affiliated group of each of the plurality of redundant data clusters stored in the each of the plurality of data processing units;
a detection module configured to detect a data migration instruction to migrate data of any one of the plurality of data processing units;
a first identification module configured to identify, in the case where the data migration instruction is detected by the detection module, a plurality of groups that a plurality of operational data clusters stored by the any one of the plurality of data processing units belong to by referring to correspondence information associating the groups with the plurality of data processing units;
a second identification module configured to identify a plurality of data processing units corresponding to each group identified by the first identification module by referring to group information associating each of the plurality of data processing units with an affiliated group of a plurality of redundant data clusters stored by the each of the plurality of data processing units; and
a change module configured to change, for each of the plurality of data processing units identified by the second identification module, a redundant data cluster of the same group as an operational data cluster stored by the any one of the plurality of data processing units to an operational data cluster.

2. The management apparatus according to claim 1, further including a construction module configured to construct a redundant system so that, after the change by the change module, each data processing unit remaining after the any one of the plurality of data processing units has been removed stores, for the set of redundant data clusters, a plurality of redundant data clusters of different groups, and affiliated groups of the operational data clusters and affiliated groups of the redundant data clusters stored in the each remaining data processing unit are different groups.

3. The management apparatus according to claim 2, further including an update module configured to update the group information based on a construction result by the construction module.

4. The management apparatus according to claim 1, further including:
a determination module configured to determine, based on characteristic information about input data, an affiliated group of the operational data relating to the input data;
a third identification module configured to identify a data processing unit corresponding to the affiliated group of the operational data relating to the input data determined by the determination module by referring to the correspondence information; and
a transfer module configured to transfer the input data to the data processing unit identified by the third identification module.

5. The management apparatus according to claim 1, further including an update module configured to update the correspondence information based on a change result by the change module.

6. The management apparatus according to claim 1, wherein each of the plurality of data processing units includes the group information, the detection module, the first identification module, the second identification module, and the change module.

7. A management apparatus, including:
a plurality of data processing units, each of the plurality of data processing units, which are configured to execute data processing, being configured to, for a set of operational data clusters and a set of redundant data clusters that are the same as the operational data clusters, respectively, store a plurality of operational data clusters of groups different from groups of another data processing unit;
a storage device configured to store the set of redundant data clusters;
a detection module configured to detect a data migration instruction to instruct data of any one of the plurality of data processing units to be migrated;
a first identification module configured to identify, in the case where the data migration instruction is detected by the detection module, a plurality of groups that a plurality of operational data clusters stored by the any one of the plurality of data processing units belong to by referring to correspondence information associating the groups with the plurality of data processing units;
a second identification module configured to identify a plurality of data processing units corresponding to each group identified by the first identification module by referring to group information associating each of the plurality of data processing units with an affiliated group of a plurality of redundant data clusters stored by the each of the plurality of data processing units; and
a storage module configured to extract, for each of the plurality of data processing units identified by the second identification module, from the storage device, a redundant data cluster of the same group as an operational data cluster stored by the any one of the plurality of data processing units, and store the extracted redundant data cluster as the operational data cluster in the data processing unit corresponding to the affiliated group of the extracted redundant data cluster.

8. A management apparatus, including:
a plurality of data processing units, each of the plurality of data processing units, which are configured to execute data processing, being configured to, for a set of operational data clusters and a set of redundant data clusters that are the same as the operational data clusters, respectively, store a plurality of operational data clusters of groups different from groups of another data processing unit and store a plurality of redundant data clusters of groups different from the groups of the another data processing unit, each affiliated group of each of the plurality of operational data clusters stored in each of the plurality of data processing units being a group different from each affiliated group of each of the plurality of redundant data clusters stored in the each of the plurality of data processing units;
a detection module configured to detect addition of a data processing unit;
a calculation module configured to calculate, in the case where the addition of the data processing unit is detected by the detection module, a number of groups of operational data clusters and a number of groups of redundant data clusters to be stored by the added data processing unit based on a total number of groups and a total number of data processing units including the added data processing unit; and
a construction module configured to construct, based on the number of groups calculated by the calculation module, a redundant system so that:
each of the plurality of data processing units including the added data processing unit stores a plurality of operational data clusters of groups different from the groups of another data processing unit than the each of the plurality of data processing units;
each of the plurality of data processing units including the added data processing unit stores a plurality of redundant data clusters of groups different from the groups of another data processing unit than the each of the plurality of data processing units; and
each affiliated group of each of the plurality of operational data clusters stored in each of the plurality of data processing units including the added data processing unit is a group different from each affiliated group of each of the plurality of redundant data clusters stored in the each of the plurality of data processing units including the added data processing unit.

9. The management apparatus according to claim 8, further including an update module configured to update group information associating each of the plurality of data processing units with an affiliated group of each of a plurality of redundant data clusters stored by the each of the plurality of data processing units based on a construction result by the construction module.

10. The management apparatus according to claim 8 or 9, further including:
a determination module configured to determine, based on characteristic information held by input data, an affiliated group of the input data;
an identification module configured to identify a data processing unit corresponding to the affiliated group of the operational data relating to the input data determined by the determination module by referring to correspondence information associating the groups with the plurality of data processing units; and
a transfer module configured to transfer the input data to the data processing unit identified by the identification module.

11. The management apparatus according to claim 10, further including an update module configured to update, in the case where the redundant system is constructed by the construction module, the correspondence information by associating an affiliated group of an operational data cluster migrated to the added data processing unit with the data processing unit of a migration source of the migrated operational data cluster and the added data processing unit.

12. The management apparatus according to claim 11, wherein the update module updates, after a predetermined period of time has elapsed after updating the correspondence information, the correspondence information by deleting information specifying the data processing unit of the migration source associated with the affiliated group of the operational data cluster migrated to the added data processing unit.

13. The management apparatus according to claim 8, wherein each of the plurality of data processing units includes the detection module, the calculation module and the construction module.

14. A management apparatus, including:
a plurality of data processing units, each of the plurality of data processing units, which are configured to execute data processing, being configured to store, for a set of operational data clusters and a set of redundant data clusters that are the same as the operational data clusters, respectively, a plurality of operational data clusters of groups different from groups of another data processing unit;
a storage device configured to store the set of redundant data clusters;
a detection module configured to detect addition of a data processing unit;
a calculation module configured to calculate, in the case where the addition of the data processing unit is detected by the detection module, a number of groups of operational data clusters and a number of groups of redundant data clusters to be stored by the added data processing unit based on a total number of groups and a total number of data processing units including the added data processing unit; and
a construction module configured to construct, based on the number of groups calculated by the calculation module, a redundant system so that:
each of the plurality of data processing units including the added data processing unit stores a plurality of operational data clusters of groups different from the groups of another data processing unit than the each of the plurality of data processing units;
each of the plurality of data processing units including the added data processing unit stores, in the storage device, a plurality of redundant data clusters of groups different from the groups of another data processing unit than the each of the plurality of data processing units in a manner that enables access to the stored plurality of redundant data clusters; and
each affiliated group of each of the plurality of operational data clusters of each of the plurality of data processing units including the added data processing unit is a group different from each affiliated group of each of the plurality of redundant data clusters of the each of the plurality of data processing units including the added data processing unit.

15. A management system, including:
a plurality of data processing apparatus configured to execute data processing; and
a management apparatus configured to manage the plurality of data processing apparatus,
the plurality of data processing apparatus and the management apparatus being communicably coupled to each other,
each of the plurality of data processing apparatus being configured to, for a set of operational data clusters and a set of redundant data clusters that are the same as the operational data clusters, respectively, store a plurality of operational data clusters of groups different from groups of another data processing apparatus, and store a plurality of redundant data clusters of groups different from the groups of the another data processing apparatus,
each affiliated group of each of the plurality of operational data clusters stored in each of the plurality of data processing apparatus being a group different from each affiliated group of each of the plurality of redundant data clusters stored in each of the plurality of data processing apparatus,
the management apparatus including:
a detection module configured to detect a data migration instruction to migrate data of any one of the plurality of data processing apparatus;
a first identification module configured to identify, in the case where the data migration instruction is detected by the detection module, a plurality of groups that a plurality of operational data clusters stored by the any one of the plurality of data processing apparatus belong to by referring to correspondence information associating the groups with the plurality of data processing apparatus;
a second identification module configured to identify a plurality of data processing apparatus corresponding to each group identified by the first identification module by referring to group information associating each of the plurality of data processing apparatus with an affiliated group of a plurality of redundant data clusters stored by the each of the plurality of data processing apparatus; and
a change module configured to change, for each of the plurality of data processing units identified by the second identification module, a redundant data cluster of the same group as an operational data cluster stored by the any one of the plurality of data processing apparatus to an operational data cluster.
